(19) Europäisches Patentamt
European Patent Office
Office européen des brevets

(11) **EP 1 643 299 A1**

(12) **EUROPEAN PATENT APPLICATION**
published in accordance with Art. 158(3) EPC

(43) Date of publication:
05.04.2006 Bulletin 2006/14

(51) Int Cl.:
*G02F 1/1339* (1990.01)

(21) Application number: 04745879.9

(86) International application number:
PCT/JP2004/008325

(22) Date of filing: 14.06.2004

(87) International publication number:
WO 2005/015299 (17.02.2005 Gazette 2005/07)

(84) Designated Contracting States:
DE GB NL

(30) Priority: 13.06.2003 JP 2003169849
18.06.2003 JP 2003173776
26.12.2003 JP 2003432900
09.04.2004 JP 2004116137
07.05.2004 JP 2004138817

(71) Applicant: SEKISUI CHEMICAL CO., LTD.
Osaka-shi,
Osaka 530-8565 (JP)

(72) Inventor: Ueda, Michihisa,
Sekisui Chemical Co., Ltd.
Mishima-gun,
Osaka 6188589 (JP)

(74) Representative: Wiedemann, Peter
Hoffmann - Eitle
Patent- und Rechtsanwälte
Arabellastrasse 4
D-81925 München (DE)

(54) **LIQUID CRYSTAL DISPLAY DEVICE MANUFACTURING METHOD**

(57) It is the object of the present invention to provide a method of producing a liquid crystal display by which spacer particles can be arranged efficiently, highly precisely and selectively in light shielded regions (non-display parts) or the regions corresponding to the light shielded regions of a substrate for a liquid crystal display by using an ink-jet apparatus and by which a liquid crystal display capable of displaying images with excellent display quality without occurrence of depolarizing attributed to the spacer particles or deterioration of contrasts and color tone owing to light blank can be realized.

The present invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the spacer particle in the spacer particle dispersion being subjected to electrostatic charge treatment and the light shielding region or the region corresponding to the light shielding region of the substrate being entirely or partially electrostatically charged with electric charge relatively opposite to that of the spacer particle.

EP 1 643 299 A1

**Description**

TECHNICAL FIELD

The invention relates to a method of producing a liquid crystal display by which spacer particles can be arranged efficiently, highly precisely and selectively in light shielded regions (non-display parts) or the regions corresponding to the light shielded regions of a substrate for a liquid crystal display by using an ink-jet apparatus and by which a liquid crystal display capable of displaying images with excellent display quality without occurrence of depolarizing attributed to the spacer particles or deterioration of contrasts and color tone owing to light blank can be realized.

BACKGROUND ART

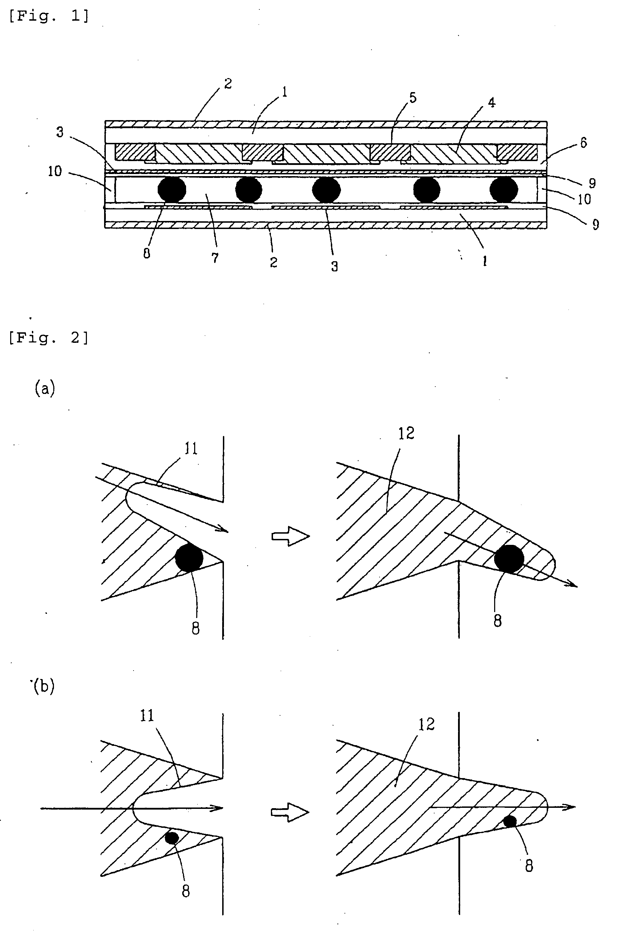

Today, a liquid crystal display has been employed widely for personal computers, mobile electronic appliances, and the like. As shown in Fig. 1, the liquid crystal display is composed by arranging two transparent substrates 1 on the opposite sides each having a transparent electrode 3, an oriented film 9, a color filter 4, a black matrix 5, and the like in the inside and a polarizing plate 2 in the outside via a sealing agent 10 in the circumferences of the substrates 1, and enclosing a liquid crystal 7 in the gap between the substrates. In this liquid crystal display, a spacer 8 regulates the interval between two transparent substrates 1 and keeps a proper liquid layer thickness (cell gap).

In a conventional method of producing a liquid crystal display, since the spacer is sprayed randomly and evenly on the substrate in which pixel electrodes are formed, the spacer is arranged even in the pixel electrodes, that is display parts (pixel regions), of the liquid crystal display. The spacer is generally made of a synthetic resin or glass and if the spacer is arranged in the pixel electrodes, light leakage in the spacer portions is caused owing to a depolarizing effect. Further, owing to disorder of orientation of the liquid crystal in the surface of the spacer, light blank is caused to deteriorate the contrast and color tone and worsen the display quality. Further, in the case of a TFT liquid crystal display, TFT elements are arranged on a substrate and if the spacer is arranged on an element, a serious problem that the element is broken when pressure is applied to the substrate may possibly occur.

To solve such problems attributed to the random spray of spacer, it is proposed to arrange the spacer under the light shielding layer (portions of defining the pixel regions). As a method of arranging the spacer only in specified positions in such a manner are proposed a method (reference to Patent document No. 1) of spraying a spacer through a mask having apertures arranged at positions where the spacer should be placed and a method (reference to Patent document No. 2) of electrostatically attracting the spacer on a photoconductor and then transferring the spacer to a transparent substrate.

However, these methods involve direct contact of the mask or the photoconductor with the substrates, the oriented films on the substrates are damaged and it results in a problem that the images of the liquid crystal display are deteriorated.

Further, a method of producing a liquid crystal display involving arranging an electrostatically charged spacer at specified positions owing to electrostatic resilient force by applying voltage to the image electrodes on a substrate and spraying the electrically charged spacer is disclosed (reference to Patent Document No. 3).

However, this method requires an electrode formed in accordance with the arrangement patterns and therefore cannot completely arrange the spacer in optional portions.

On the other hand, a method of arranging a spacer by an ink-jet printing method is disclosed (reference to Patent Document No. 4). This method is an effective method since, unlike the above-mentioned methods, no direct contact with the substrate is involved and the spacer can be arranged in optional positions in optional patterns.

However, since spacer particles with about 1 to 10 $\mu$m size are contained in a spacer particle dispersion to be sprayed, the nozzle diameter of an ink-jet head has to be enlarged so as to ejection the spacer dispersion straight forward and consequently, the droplets ejected on a substrate become large and come out to the pixel regions from the light shielding regions even if spraying of the spacer dispersion is sprayed aiming to the shielding regions and thus the spacer is arranged even in the transmission regions and thus there still remains a problem that the contrast and the liquid crystal display quality cannot be improved sufficiently.

Patent Document No. 1: Japanese Kokai Publication Hei-4-198919
Patent Document No. 2: Japanese Kokai Publication Hei-6-258647
Patent Document No. 3: Japanese Kokai Publication Hei-10-339878
Patent Document No. 4: Japanese Kokai Publication Sho-57-58124

DISCLOSURE OF THE INVENTION PROBLEMS WHICH THE INVENTION IS TO SOLVE

In view of the above-mentioned state of the art, it is the object of the invention to provide a method of producing a liquid crystal display by which spacer particles can be arranged efficiently, highly precisely and selectively in light shielded regions (non-display parts) or the regions corresponding to the light shielded regions of a substrate for a liquid crystal display by using an ink-jet apparatus and by which a liquid crystal display capable of displaying images with excellent display quality without occurrence of depolarizing attributed to the spacer particles or deterioration of contrasts and color tone owing to light blank can be realized.

MEANS FOR SOLVING THE OBJECT

The first invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the spacer particle in the spacer particle dispersion being subjected to electrostatic charge treatment and the light shielding region or the region corresponding to the light shielding region of the substrate being entirely or partially electrostatically charged with electric charge relatively opposite to that of the spacer particle.

The second invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the reducing contact angle ($\theta$r) of the spacer particle dispersion to the substrate, the spacer particle dispersion being ejected to, being 5° or more.

The third invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited in a portion having a low energy surface formed in the light shielding region or the region corresponding to the light shielding region of at least one substrate, the droplet of the spacer particle dispersion being dried to keep the spacer particle in the light shielding region or the region corresponding to the light shielding region.

The fourth invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited to include a portion different in level formed in the region corresponding to the light shielding region of at least one substrate, and being dried to keep the spacer particle in the region corresponding to the light shielding region.

Hereinafter the invention will be described more in details.

The production methods of a liquid crystal display of the first, the second, the third and the fourth invention (hereinafter, in the case the methods are not particularly discriminated, referred simply to as a method of producing a liquid crystal display of the invention) all comprises, ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region.

The method of producing a liquid crystal display of the invention comprises ejecting a spacer particle dispersion obtainable by dispersing spacer particles by an ink-jet apparatus at least to light shielding regions of a substrate with a pixel formed or to the regions corresponding to the light shielding regions in another substrate with no pixel formed.

As the substrates to which the above-mentioned spacer particle dispersion is ejected can be employed glass and resin plates which are generally used as panel substrates for a liquid crystal display.

These substrates are used in a pair of two substrates and one of them has pixel regions arranged in prescribed patterns and light shielding regions defining the pixel regions. For example, in the case of color filter substrates, the pixel regions are color filters and these pixel regions are defined by the light shielding regions (a black matrix) of resin in which a metal such as chromium or carbon black through which actually scarcely light passes is dispersed.

The regions corresponding to the light shielding regions mean, in the case the substrate is color filter substrate, the black matrix and also, in the case a pair of two substrate of which one substrate (a TFT array substrate of a TFT liquid crystal panel) is overlaid on the other having the light shielding regions, mean the regions (the wiring parts and the like in the case of a TFT substrate) of the former substrate corresponding to the light shielding regions of the latter counterpart substrate.

The spacer particles to be used for the method of producing a liquid crystal display of the invention are not particularly limited and may be, for example, inorganic particles such as silica particles or organic polymer type particles. Among them, the organic polymer type particles are preferable to be used since they have proper hardness not to damage an oriented film formed on the substrates of a liquid crystal display, are easy to follow the alteration of the thickness owing to the thermal expansion and thermal shrinkage and further, the movement of spacers in the cell insides is relatively slight.

The composition of the above-mentioned organic polymer type particles is not particularly limited, however in general, in terms of the strength, a monofunctional monomer having one vinyl group and a polyfunctional monomer having two or more vinyl groups are used in combination. The ratio of the monofunctional monomer and the polyfunctional monomer is not particularly limited and properly adjusted depending on the strength and the hardness required for the organic polymer particles to be obtained.

Examples of the above-mentioned monofunctional monomer include styrene derivatives such as styrene, α-methylstyrene, p-methylstyrene, p-chlorostyrene, and chloromethylstyrene; vinyl chloride; vinyl esters such as vinyl acetate and vinyl propionate; unsaturated nitriles such as acrylonitrile; (meth)acrylic acid ester derivatives such as methyl (meth)acrylate, ethyl (meth)acrylate, butyl (meth)acrylate, 2-ethylhexyl (meth)acrylate, stearyl (meth)acrylate, ethylene glycol (meth)acrylate, trifluoroethyl (meth)acrylate, pentafluoropropyl (meth)acrylate, and cyclohexyl (meth)acrylate. These monofunctional monomers may be used alone or two or more of them may be used in combination.

Examples of the polyfunctional monomer include divinylbenzene, 1,6-hexanediol di(meth)acrylate, trimethylol propanetri(meth)acrylate, tetramethylol methane(meth)acrylate, tetramethylol propanetetra(meth)acrylate, diallyl phthalate and its derivatives, triallyl isocyanurate and its derivatives, trimethylol propanetri(meth)acrylate and its derivatives, pentaerythritol tri(meth)acrylate, pentaerythritol tetra(meth)acrylate, dipentaerythritol hexa(meth)acrylate, polyethylene glycol di(meth)acrylate such as ethylene glycol di(meth)acrylate, polypropylene glycol di(meth)acrylate such as propylene glycol di(meth)acrylate, polytetramethylene glycol di(meth)acrylate, neopentyl glycol di(meth)acrylate, 1,3-butylene glycol di(meth)acrylate, 2,2-bis[4-(methacryloxypolyethoxy)phenyl]propane di(meth)acrylate such as 2,2-bis[4-(methacryloxyethoxy)phenyl]propane di(meth)acrylate, hydrogenated 2,2-bis[4-(acryloxypolyethoxy)phenyl]propane di(meth)acrylate, and 2,2-bis[4-(acryloxyethoxypolypropoxy)phenyl]propane di(meth)acrylate. These polyfunctional monomers may be used alone or two or more of them may be used in combination.

Monomers having hydrophilic groups may be used as the above-mentioned monofunctional or polyfunctional monomer.

Examples of the hydrophilic groups include a hydroxyl group, a carboxyl group, a sulfonyl group, a phosphonyl group, an amino group, an amido group, an ether group, a thiol group, a thioether group and the like.

Examples of the monomers having hydrophilic groups include monomers having a hydroxyl group such as 2-hydroxyethyl (meth)acrylate, 1,4-hydroxybutyl (meth)acrylate, (poly)caprolactone-modified hydroxyethyl (meth)acrylate, allyl alcohol, and glycerin monoallyl ether; acrylic acid such as (meth)acrylic acid, α-ethylacrylic acid, and crotonic acid and α- or β-alkyl derivatives thereof; unsaturated dicarboxylic acids such as fumaric acid, maleic acid, citraconic acid, and itaconic acid; monomers having a carboxylic group such as mono(2-(meth)acryloyloxyethyl ester derivatives of these unsaturated dicarboxylic acids; monomers having a sulfonyl group such as tert-butylacrylamidosulfonic acid, styrenesulfonic acid and 2-acrylamido-2-methylpropanesulfonic acid; monomers having a phosphonyl group such as vinyl phosphate and 2-(meth)acryloyloxyethylphosphate; compounds having an amino group such as amines having an acryloyl group such as dimethylaminoethyl methacrylate and diethylaminoethyl methacrylate; monomers having a hydroxyl group and an ether group together such as (poly)ethylene glycol (meth)acrylate and propylene glycol (meth)acrylate; monomers having an ether groups such as alkyl ether-terminated (poly)ethylene glycol (meth)acrylate, alkyl ether-terminated (poly)propylene glycol (meth)acrylate, and tetrahydrofurfuryl (meth)acrylate; and monomers having an amido group such as (meth)acrylamide, methylol (meth)acrylamide, and vinylpyrrolidone.

The method of producing the particles by polymerization of the above-mentioned monomers is not particularly limited and may include a suspension polymerization, a seed polymerization, and a dispersion polymerization and any method may be employed. The above-mentioned suspension polymerization is preferably employed for obtaining a various types of particles having desired particle diameter or particle diameter distribution by carrying out classification step in the case of employing the particles for the spacer particles since the method is used for producing particles with a relatively wide particle diameter distribution and polydisperse dispersion. On the other hand, the seed polymerization and the dispersion polymerization are preferably employed for producing a large quantity of particles with a specified particle diameter since mono-dispersion particles are obtained without classification step.

The above-mentioned suspension polymerization is a method for polymerizing a monomer composition comprising a monomer and a polymerization initiator by dispersing the composition in a dispersing medium so as to control the particle diameter as aimed.

The dispersing medium to be used for the suspension polymerization may generally be a dispersing medium obtainable by adding a dispersion stabilizer in water. The above-mentioned dispersion stabilizer may include, for example, polymers soluble in media such as poly(vinyl alcohol), polyvinylpyrrolidone, methyl cellulose, ethyl cellulose, poly(acrylic acid), polyacrylamide, and polyethylene oxide. Also nonionic or ionic surfactant may be adequately usable.

Although differing depending on the above-mentioned polymerization initiator or the types of the monomers, the polymerization conditions are generally 50 to 80°C for polymerization temperature and 3 to 24 hours for polymerization duration.

The above-mentioned seed polymerization is a polymerization method for expanding seed particles in mono-dispersion state to the aimed particle diameter synthesized by soap-free polymerization or emulsion polymerization by making the particles further adsorb a polymerizable monomer.

The organic monomer to be used for the seed particles is not particularly limited and the above-mentioned monomers may be used, however the composition of the seed particles is preferable to contain monomers compatible with the monomer components at the time of seed polymerization so as to suppress phase separation at the time of seed polymerization and in terms of the mono-dispersion of the particle diameter distribution, styrene and its derivatives are preferable.

The particle diameter distribution of the seed particles is reflected also to the particle diameter distribution after seed polymerization and therefore it is preferable to be mono-dispersion as much as possible and CV value {(standard deviation of particle diameter)/(average particle diameter)×100} is preferably 5% or lower.

Since the phase separation from the seed particles tends to take place easily at the time of seed polymerization, the monomers to be absorbed in the seed polymerization is preferable to have a composition as close to the composition of the seed particles as possible and it is preferable to absorb an aromatic divinyl monomer if the seed particles are of a styrene type and to absorb an acrylic type polyfunctional vinyl monomer if they are of an acrylic type to carry out polymerization.

In the above-mentioned seed polymerization, a dispersion stabilizer may be used based on the necessity. Examples of the dispersion stabilizer include polymers soluble in media such as poly(vinyl alcohol), polyvinylpyrrolidone, methyl cellulose, ethyl cellulose, poly(acrylic acid), polyacrylamide, and polyethylene oxide. Also nonionic or ionic surfactant may be adequately usable.

In the above-mentioned seed polymerization, it is preferable to add a monomer 20 to 100 part by weight to seed particles 1 part by weight. If the monomer is less than 20 part by weight, the breaking strength of the obtained particles is sometimes insufficient and if the monomer exceeds 100 part by weight, the particle diameter distribution tends to be wide owing to unification of particles at the time of seed polymerization.

The medium to be used for the above-mentioned seed polymerization is not particularly limited and it should be determined properly based on the polymerizable monomer to be used. However, in general, as a preferable organic solvent are exemplified alcohols, cellosolves, ketones and hydrocarbons. They may be used alone or in form of medium mixtures with other organic solvents compatible with one another and water. Specifically, examples are acetonitrile, N, N-dimethylformamide, dimethyl sulfoxide, ethyl acetate, alcohols such as methanol, ethanol, and propanol, cellosolves such as methyl cellosolve and ethyl cellosolve, and ketones such as acetone, methyl ethyl ketone, methyl butyl ketone, and 2-butanone.

The above-mentioned dispersion polymerization is a method of carrying out polymerization in a poor solvent in which a monomer is dissolved, however the produced polymer is not dissolved and adding a polymer type dispersion stabilizer to precipitate the produced polymer in particle shape.

Generally, if the monomers containing a crosslinkable monomer are polymerized by dispersion polymerization, agglomeration of fine particles tends to take place easily and it is difficult to stably obtain mono-dispersion type crosslinked particles, however selection of the polymerization conditions makes it possible to polymerize monomers containing a crosslinkable monomer.

The content of the crosslinkable monomer in the monomers containing the crosslinkable monomer is not particularly limited, however in consideration of the agglomeration of fine particles at the time of dispersion polymerization and the strength of the crosslinked fine particles to be obtained, it is preferable 50% by weight or more. If the content of the crosslinkable monomer in the monomers containing the crosslinkable monomer is less than 50% by weight, the surfaces of the fine particles produced during the polymerization become soft in the dispersion medium and therefore the fine particles are agglomerated by collision among the particles, resulting in that the particle diameter distribution of the obtained crosslinked fine particles is undesirably widened or agglomerates are formed. Further, even if the mono-dispersion state is maintained, the crosslinking density is lowered and it may not obtain sufficiently high strength needed for the spacer particles.

The dispersion medium to be used for the above-mentioned dispersion polymerization is not particularly limited and it may be selected adequately depending on the types and the compositions of monomers (monofunctional monomers, polyfunctional monomers, crosslinkable monomers and the like) and examples are alcohol such as methanol, ethanol, and propanol; cellosolves methyl cellosolve and ethyl cellosolve; ketones such as acetone, methyl ethyl ketone, methyl isobutyl ketone, and 2-butanone; acetic acid esters such as methyl acetate, ethyl acetate, and butyl acetate; and hydrocarbons such as acetronitrile, N,N-dimethylformamide, and dimethyl sulfoxide and also organic solvents such as organic solvents other than the exemplified ones and compatible with them, and water such as ion-exchanged water and pure water. These dispersion media may be used alone or two or more of them may be used in combination.

A polymerization initiator may be used at the time of the polymerization.
The above-mentioned polymerization initiator is not particularly limited and examples to be used are organic peroxides such as benzoyl peroxide, lauroyl peroxide, o-chlorobenzoyl peroxide, o-methoxybenzoyl peroxide, and 3,5,5-trimethylhexanoyl peroxide, tert-butyl peroxy-2-ethylhexanoate, di-tert-butyl peroxide; and azo type compounds such as azobisisobutyronitrile, azobiscyclohexacarbonitrile, and azobis(2,4-dimethylvaleronitrile).
The usage amount of the above-mentioned polymerization initiator is not particularly limited, however generally it is preferable to be 0.1 to 10 part by weight to the polymerizable monomer 100 part by weight.

Since the spacer particles to be used for the method of producing a liquid crystal display of the invention are used as a gap material for a display element, the particles are required to have strength to a certain extent.
In the case as an index showing the compressive strength of the fine particles and spacer particles is employed the compressive modulus of elasticity (10% K value) at the time when the diameter of a fine particle is displaced by 10%, the gap material for a liquid crystal display is preferable to be 2000 to 15000 MPa. If it is less than 2000 MPa, it may become difficult to keep a proper gap owing to deformation of spacer particles by the press pressure at the time of fabrication of the liquid crystal display and if it exceeds 15000 MPa, the particles cause damages on oriented films on substrates to cause display abnormality when the particles are disposed in the liquid crystal display.

The compressive modulus of elasticity (10% K value) of the above-mentioned spacer particles is the value calculated by the following method.
That is, as described in Japanese Kohyo Publication Hei-6-503180, a micro-compressive testing machine (PCT-200 model, manufactured by Shimadzu Corp.) is used as a measurement apparatus and the fine particles or the spacer particles are compressed with a smooth end face of a column with a diameter of 50 $\mu$m made of diamond and the compressive load is measured at the time when the diameter of the fine particles or the spacer particles is deformed by 10%.

The spacer particles obtained by the above-mentioned method may be colored to improve the contrast of display elements. Examples of the colored particles include particles treated with carbon black, disperse dyes, acidic dyes, basic dyes, and metal oxide and also particles colored by forming films of organic materials on the surfaces and decomposing or carbonizing the films at a high temperature.
In the case the materials themselves for forming the particles have colors themselves, they may be used as they are with no need of coloration.

The spacer particle dispersion to be used for the method of producing a liquid crystal display is obtainable by dispersing the above-mentioned spacer particles in a dispersion medium.

The above-mentioned dispersion medium is not particularly limited if it is a liquid at a temperature of ejection from the head of an ink-jet apparatus and can disperse the spacer particles and may be various kinds of media. Among them, water soluble or hydrophilic media are preferable. In this connection, since heads of some ink-jet apparatuses are made suitably applicable to a water- based dispersion medium, in the case of using these heads, a strongly hydrophobic dispersion medium penetrates the members composing the heads or some of adhesives sticking the members are eluted to the dispersion medium. Accordingly, the dispersion medium for the spacer particle dispersion is preferably water or a hydrophilic dispersion medium.

The water is not particularly limited and examples of the water may be ion-exchanged water, pure water, groundwater, tap water, and industrial water. These waters may be used along or two or more kinds may be used in combination.

The above-mentioned hydrophilic dispersion medium is not particularly limited and may include, for example, monoalcohols such as ethanol, n-propanyl, 2-propanol, 1-butanol, 2-butanol, 1-hexanol, 1-methoxy-2-propanol, furfuryl alcohol, and tetrahydrofurfuryl alcohol; ethylene glycol, multimeric complex of ethylene glycol such as diethylene glycol, triethylene glycol, and tetraethylene glycol; propylene glycol, multimeric complex of propylene glycol such as dipropylene glycol, tripropylene glycol, and tetrapropylene glycol; lower monoalkyl ethers such as monomethyl ether, monoethyl ether, monoisopropyl ether, monopropyl ether and monobutyl ether of glycols; lower dialkyl ethers such as dimethyl ether, diethyl ether, diisopropyl ether, and dipropyl ether; alkyl esters such as monoacetate and diacetate; diols such as 1,3-propanediol, 1,2-butanediol, 1,3-butanediol, 1,4-butanediol, 3-methyl-1,5-pentanediol, 3-hexene-2,5-diol, 1,5-dpentanediol, 2,4-pentanediol, 2-methyl-2,4-pentanediol, 2,5-hexanediol, 1,6-hexanediol, and neopentyl glycol; ether derivatives of diols; acetate derivatives of diols; polyhydric alcohols, such as glycerin, 1,2,4-butanetriol, 1,2,6-hexanetriol, 1,2,5-pentanetriol, trimethylolpropane, trimethylolethane, and pentaerythritol, their ether derivatives and acetate derivatives; dimethyl sulfoxide, thiodiglycol, N-methyl-2-pyrrolidone, N-vinyl-2-pyrrolidone, γ-butyrolactone, 1,3-dimethyl-2-imidazolidine, sulfolane, formamide, N,N-dimethylformamide, N,N-diethylformamide, N-methylformamide, acetamide, N-methylacetamide, α-terpineol, ethylene carbonate, propylene carbonate, bis-β-hydroxyethylsulfone, bis-β-hydroxyethylurea, N,N-diethylethanolamine, abietinol, diacetone alcohol, and urea.

In the method of producing a liquid crystal display of the invention, the dispersion medium of the spacer particle dispersion is preferable to contain a medium having a boiling point lower than 100°C, more preferably an organic solvent having a boiling point 70°C or more and lower than 100°C. The boiling point in this invention means the boiling point under 1 atmospheric pressure condition.

Examples of the medium having a boiling point lower than 100°C are lower monoalcohols such as ethanol, n-propanol, and 2-propanol and acetones.

In the case of spraying the above-mentioned spacer particle dispersion and drying the dispersion, if the dispersion medium at a high temperature is brought into contact with the oriented films, the dispersion contaminates the oriented films and consequently, the display image quality of the liquid-crystal display apparatus is deteriorated and therefore, the drying temperature cannot be increased so high. However, the use of the medium having a boiling point lower than 100°C as described above makes it possible to lower the drying temperature and thus the oriented films are prevented from contamination.

The ratio of the medium with a boiling point lower than 100°C in the dispersion medium is preferably 5 to 80% by weight. If it is lower than 5% by weight, the drying speed in form of the dispersion at a relatively lower drying temperature applied for the invention becomes slow and the productivity may possibly be deteriorated. If it exceeds 80% by weight, the spacer particle dispersion in the vicinity of the nozzle of the ink-jet apparatus tends to be dried easily or the spacer particle dispersion is dried easily during the production method or in a tank, resulting in high probability of occurrence of agglomerated particles.

A medium to be mixed with a medium having a boiling point lower than 100°C is a medium having a boiling point of 100°C or higher and a mixture of water with a medium having boiling point of 150°C or higher is preferably and a mixture of water with a medium having boiling point of 150°C or higher and 200°C or lower is more preferably.

Examples of the medium having a boiling point of 150°C or higher are lower alcohol ethers such as ethylene glycol, ethylene glycol monomethyl ether, ethylene glycol dimethyl ether. Such a medium prevents the spacer particle dispersion from excess drying in the vicinity of the nozzle of the ink-jet apparatus and deterioration of the ejection precision and also suppresses agglomerated particles owing to the drying of the spacer particle dispersion during the production method or in a tank. The ratio of the medium with a boiling point of 150°C or higher in the medium is preferably 0.1 to 95% by weight, more preferably 0.2 to 90% by weight. If it is lower than 0.1% by weight, deterioration of the ejection precision and agglomerated particle formation tend to be caused owing to the above mentioned drying of the dispersion and if it exceeds 95% by weight or the boiling point exceeds 200°C, it takes a considerably long time to dry, resulting in decrease of the efficiency and also deterioration of display images of the liquid crystal display owing to the contamination of the oriented films.

Further, the medium having a boiling point lower than 100°C is preferable to have surface tension of 25 mN/m or lower at 20°C and the medium having a boiling point 100°C or higher to be mixed with the medium having a boiling point lower than 100°C mixed is preferable to have surface tension of 30 mN/m or higher.

If the surface tension of a liquid to be ejected by a common ink-jet apparatus is 30 to 50 mN/m, good ejection precision can be obtained. Further, as the surface tension of dispersion droplets ejected on a substrate is higher, it is more preferable for moving the spacer particles during the drying step.

Addition of the medium having a boiling point lower than 100°C and surface tension of 25 mN/m or lower is effective to relatively lower the surface tension of the spacer particle dispersion at the time of ejection, so that a high ejection precision can be obtained. Addition of the medium having a boiling point 150°C or higher and surface tension of 30 mN/m or higher is effective to adjust the reducing contact angle to be 5° or more. That is, after deposition of the droplets of the spacer dispersion on a substrate, the medium having a boiling point lower than 100°C and relatively low surface tension is at first evaporated and the surface tension of the remaining dispersion is increased to move the spacer particles easily toward the center of the deposition point and therefore, it is preferable.

In the method of producing a liquid crystal display of the invention, the surface tension of the above-mentioned spacer particle dispersion is preferable to be prepared so as to be [surface energy of substrate -5] to 50 (mN/m). For example, if the surface energy of the substrate is 30mN/m, it is preferable to be 25 to 50 mN/m. If the surface tension is lower than [surface energy of substrate -5] mN/m, even in the case a substrate having an oriented film with strong hydrophobicity (low surface tension) is used, the contact angle (initial contact angle) of the droplets of the spacer particle dispersion ejected to the substrate cannot be adjusted to be high and the spacer dispersion wets the substrate and spreads on the substrate, so that the arrangement intervals of the spacer particles cannot be narrowed in some cases and if it exceeds 50 mN/m, foams are left in a nozzle of an ink-jet head to sometimes cause a problem of impossibility of ejection.

The spacer particle dispersion is preferable to be adjusted to have an initial contact angle θ of 10 to 110 degree between the spacer particle dispersion and the substrate surface. If the initial contact angle θ between the spacer particle dispersion and the substrate surface is less than 10 degree, droplets of the spacer particle dispersion ejected to the substrate wet the substrate and spread on the substrate, so that the arrangement intervals of the spacer particles cannot be narrowed in some cases and if it exceeds 110 degree, the droplets of the spacer particles easily move on the substrate by little vibration and accordingly the arrangement precision is sometimes deteriorated or the adhesion strength between the spacer particles and the substrate may possibly deteriorated.

In the method of producing a liquid crystal display of the invention, the viscosity of the spacer particle dispersion at the time of ejection is preferably 0.5 to 15 mPa·s and more preferably 5 to 10 mPa·s since if it is so high, ejection is impossible by an ink-jet apparatus and if it is so low, stable ejection becomes impossible, e.g. control of the ejection amount becomes difficult. At the time of ejecting the spacer particle dispersion, the head temperature of an ink-jet may be cooled by a Peltier element or a coolant or heated by a heater to adjust the liquid temperature -5 to 50°C at the time of ejecting the spacer particle dispersion.

The solid matter concentration of the spacer particles in the above-mentioned spacer particle dispersion is preferably 0.01 to 5% by weight and more preferably 0.1 to 2% by weight. If it is lower than 0.01% by weight, the probability that no spacer particle is contained in a ejected droplet is increased and if it exceeds 5% by weight, a nozzle of an ink-jet apparatus tends to be blocked easily and the number of the spacer particles contained in a dispersed and deposited droplet becomes too high to move the spacer particles during the drying step.

It is also preferable for the spacer particle dispersion to contain the spacer particles dispersed in mono-granular state. If there exist agglomerates in the dispersion, not only the ejection precision is deteriorated but also blocking of a nozzle of an ink-jet apparatus tends to be caused easily.

In the method of producing a liquid crystal display of the invention, one or more kinds of various additives selected from adhesive components for providing the adhesive property in the spacer particle dispersion as well as various kinds of surfactants (emulsifiers), tackifiers, pH adjustment agents, defoaming agents, antioxidants, heat stabilizers, light stabilizers, ultraviolet absorbents, coloring agents and the like may be added for improving the dispersibility of the spacer particles, controlling the physical properties such as surface tension and viscosity, and thereby improving the ejection precision and the mobility of the spacer particles to an extent that the effects of the invention are not inhibited.

In the method of producing a liquid crystal display of the first invention, the spacer particles in the above-mentioned spacer particle dispersion are subjected to electrostatic charge treatment.

Since the spacer particles are subjected to the electrostatic charge treatment, the dispersibility and dispersion stability of the spacer particles in the spacer dispersion are heightened and in the case a wiring material, which will be described later, is formed, the spacer particles easily gather together in the vicinity of the wiring material (difference in level) by electrophoretic effect at the time of spraying.

The above-mentioned electrostatic charge treatment means treatment for making the spacer particles have some potential even in the spacer particle dispersion and the potential (electric charge) can be measured by an already existing method using a zeta potential measurement meter and the like.

The method for carrying out the electrostatic charge treatment may include a method for adding a charge control agent to the spacer particles; a method of producing the spacer particles from monomers containing a monomer easy to be electrostatically charged; and a method of carrying out surface treatment capable of charging the spacer particles.

The method for adding a charge control agent to the spacer particles may include a method of carrying out polymerization in the presence of a charge control agent at the time of polymerization of the spacer particles and thereby adding the agent in the spacer particles; a method of copolymerizing a monomer composing the spacer particles and a charge control agent having a functional group copolymerizable with the monomer composing the spacer particles and thereby adding the agent in the spacer particles at the time of polymerizing the spacer particles; a method of copolymerizing a charge control agent having a functional group copolymerizable with the monomer to be used for surface modification of the spacer particles and thereby adding the agent in the surface modification layer at the time of surface-modifying the spacer particles, which will be described later; and a method of causing reaction of charged particles having a functional group with the surface-modification layer or functional groups of the spacer particles and thereby adding the agent in the surface.

As the charge control agent, compounds described in Japanese Kokai Publication 2002-148865 can be used. Practical examples are organometal compounds, chelating compounds, monoazo type dye-metal compounds, acetylacetone-metal compounds, aromatic hydroxycarboxylic acids, aromatic mono and polycarboxylic acids, and their metal salts, anhydrides, esters, and phenol derivatives such as bisphenol. Examples also include urea derivatives, metal-containing salicylic acid type compounds, quaternary ammonium salts, Calixarene, silicon compounds, styrene-acrylic acid copolymers, styrene-methacrylic acid copolymers, styrene-acrylsulfonic acid copolymers, non-metal carboxylic acid compounds, Nigrosine and fatty acid metal salt-modified compounds, tributylbenzyl ammonium 1-hydroxy-4-naphthosulfonate, quaternary ammonium salts such as tetrabutylammonium tetrafluoroborate, onium salts such as phosphoniums which are their analogous compounds, lake pigments of them, and triphneylmethane dyes and their lake pigments (as agents for lake formation are exemplified phosphorus tungstic acid, phosphorus molybdic acid, tannic acid, lauric acid, gallic acid, ferricyanides, ferrocyanides and the like), higher fatty acid metal salts, diorganotin oxides such as dioctyltin oxide, dioctyltin oxide, and dicyclohexyltin oxide, and diorganotin borates such as dibutyltin borate, dioctyltin borate, and dicyclohexyltin borate. These charge control agents may be used alone or two or more of them may be used in combination. The electric charge of the spacer particles containing the above-mentioned charge control agents can be made positive charge or negative charge relatively to the ambient environments of the spacer particles by properly selecting an adequate charge control agent among the above-mentioned charge control agents.

At the time of producing the above-mentioned spacer particles, the method of selecting a proper monomer among monomers having an electrostatically chargeable monomer may include a methods of using monomers exemplified in the producing the spacer particles and having hydrophilic functional groups in combination. The spacer particles can be made to have positive charge or negative charge relatively to the ambient environments by properly selecting an adequate monomer among these monomers having hydrophilic functional groups.

As the method of surface-modifying the spacer particles are exemplified a method of modifying the spacer particles by precipitating resin on the surfaces of the spacer particles as disclosed in Japanese Kokai Publication Hei-1-247154; a method of modifying the spacer particles by reaction of compounds reactive on the functional groups on the surfaces of the spacer particles as disclosed in_ Japanese Kokai Publication Hei-9-113915; and methods of surface-modifying the spacer particles by graft polymerization as disclosed in Japanese Kokai Publication Hei-11-223821 and Japanese Patent Application 2002-102848.

As the above-mentioned surface-modifying method of the spacer particles is preferable a method of forming a surface layer chemically bonded to the surfaces of the spacer particles since there is scarcely a problem of separation of the surface layer in the cells of a liquid crystal display or elution of the surface layer in a liquid crystal. Among them, as disclosed in Japanese Kokai Publication Hei-9-113915, a method involving causing a reaction of an oxidizing agent on the spacer particles having a reducing functional group on the surface, generating radical on the spacer particle surface, and carrying out graft-polymerization is preferable since it can increase the density of a surface layer and form a surface layer with a sufficient thickness. In this method, the electrostatically charge treatment may be carried out using monomers having hydrophilic functional groups in combination as the monomers at the time of the graft-polymerization. Execution of the surface treatment increases the adhesion property of the spacer particles to a substrate or proper selection of the monomers to be used prevents disorder of the orientation of the liquid crystal in a liquid crystal display.

In the method of producing a liquid crystal display of the first invention, the above-mentioned spacer particle dispersion is ejected to the light shielding regions of a substrate, which will be described later, or the regions corresponding to the light shielding regions and the light shielding regions or the regions corresponding to the light shielding regions are entirely or partially electrostatically charged to have opposite electric charge relatively to that of the spacer particles. Here, "relatively opposite charge" means that the electric charges of the light shielding regions and the like and the spacer particles are opposite to each other or that the light shielding regions and the like have opposite electric charge relatively to the electric charge of the spacer particles in relation to the electric charge of other portions in the substrate. In the method of producing the liquid crystal display of the first invention, it is preferable that a wiring material made of a material capable of entirely or partially electrostatically charged with electric charge opposite to that of the spacer particles exists in the above-mentioned light shielding regions or regions corresponding to the light shielding regions and it is more preferable that the wiring material is electrostatically charged with electric charge opposite to that of the spacer particles subjected to the electrostatic charge treatment.

Herein, the above-mentioned wiring material is not necessarily required to have direct contact with the deposited droplets of the spacer particle dispersion and a material with a low energy surface such as an oriented film may exist on the wiring material and via the film, the deposited droplet and the wiring material are set adjacently to each other.

Examples of such a wiring material are specifically metal materials such as chromium, molybdenum, tantalum, and aluminum which have conductivity capable of electrostatically charging only the portions such as gate electrode wires, source electrode wires, and arrays with electric charge different from that of other portions in an array substrate of a liquid crystal panel such as TFT and TFD. Herein, the electrostatic charging is carried out by applying voltage so as to generate potential difference between the wiring material and other portions. At that time, it is preferable that the potential is to be the potential opposite to that of the spacer particles subjected to the electrostatically charge treatment.

In this connection, in many cases, the potential of the spacer particles subjected to the electrostatically charge treatment in the deposited spacer particle dispersion and the potential of the wiring material are originally different from each other and since the potential of the surface-treated spacer particles and the potential of the wiring material are determined in accordance with the ionization tendency of the functional groups and atoms in the surfaces of the respective materials, it is sometimes no need to give electrostatic charge by intentionally applying voltage.

According to the method of producing a liquid crystal display of the first invention, it is supposed that the spacer particles in the droplets are moved and adsorbed to all or some of the above-mentioned light shielding regions or the regions corresponding to the light shielding regions having relatively opposite charge to that of the spacer particles by electrostatic interaction (so-called, electrostatic electrophoretic effect). Accordingly, the gathering of the spacer particles can be controlled by changing the type of the metal of the wiring or the functional group of a compound to be used for the surface treatment (for example, using an ionic functional group) or by applying negative or positive voltage to an extent that the wiring such as source wiring and gate wiring or the circuit on the entire surface of a substrate is not broken during the time the spacer particle dispersion is deposited and dried.

In the method of producing a liquid crystal display of the first invention, ejecting a charged ink obtainable by dissolving a charged substance or dispersing a charged substance with a particle diameter 1 $\mu$m or less to the light shielding region or the region corresponding to the light shielding region by an ink-jet manner and drying the charged ink, and then the spacer particle dispersion obtainable by dispersing the spacer particle subjected to electrostatic charge treatment being deposited to a portion including the position of the ejected and dried charged ink, is preferable.

The above charged ink is obtained by dissolving a charged substance or dispersing a charged substance with a particle diameter of 1 $\mu$m or less.
The charged substance dissolved or dispersed in the charged ink has electrostatically interactive function with the spacer particles subjected to the electrostatic charge treatment.
When the charged ink is ejected and dried by ink-jet manner at specified positions corresponding the light shielding regions or the regions corresponding to the light shielding regions, the spacer particle dispersion containing the spacer particles subjected to the electrostatic charge treatment dispersed therein is successively ejected at positions including the positions where the charged ink is dried, the spacer particles gather toward the positions where the charged ink is dried in the case the charged material has the electric charge opposite to that of the above-mentioned spacer particles.
Accordingly, it is preferable that the electric charge of the charged ink and the electric charge of the spacer particles subjected to the electrostatic charge treatment are opposite to each other. However, even in the case the electric charge of the charged substance is same as the electric charge of the above-mentioned spacer particles, if the electric charge of the charged substance is relatively opposite to the electric charge of the spacer particles in relation to the electric charge of other portions having the electric charge in the substrate, the spacer particles gather toward the positions where the charged ink is dried.

Herein, at the time of ejecting the charged ink by ink-jet manner, the specified regions where the charged ink is ejected on the light shielding regions can be narrowed by decreasing the ejection amount of the charged ink to be ejected per one time ejection.
Therefore, when the spacer particle dispersion is ejected to the portions so as to include the positions of the ejected and dried charged ink, the spacer particles gather toward the positions of the ejected and dried charged ink and the positioning precision of the gathered spacer particles (agglomerates or groups of the spacer) (hereinafter, referred to as arrangement precision of the spacer is thus made accurate. That is, when the spacer particle dispersion is ejected to the substrate, if there is no region of the ejected and dried charged ink, the spacer particles gather at any optional position in the deposition range (deposition diameter) on the substrate where the spacer dispersion is deposited, whereas in the case there are positions of the ejected and dried charged ink, the spacer particles gather toward the positions.
Specifically, the liquid amount of the charged ink ejected by one ejection is preferably controlled to be 10 pL or less at the time of ejecting the charged ink by an ink-jet manner. Control of the amount to be 10 pL or less makes the deposition points small and therefore, when the spacer particle dispersion is ejected, the spacer particles gather toward the deposition points of the charged ink along with the drying to result in further improvement of the positioning precision of the spacer particles. It is more preferably to be 5 pL or less.

The above-mentioned charged substance is not particularly limited if it is electrostatically chargeable and organic polymers type particles, inorganic particles or the charge controlling agents similar to those exemplified for the spacer particles can be exemplified.
The above-mentioned electrostatically chargeable treatment is treatment to give some how potential even in the charged ink and the potential (electric charge) can be measured by a conventional method using a zeta potential measurement appliance and the like. The method for carrying out electrostatically chargeable treatment may include a method of adding a charge controlling agent to the charged substance, a method of producing a charged substance from a monomer containing a monomer which is easy to be electrostatically charged, and a method of carrying out electrostatically chargeable surface-treatment to the charged substance. In this connection, the charge controlling agent and the method of adding the charge control agent may be same as the above-mentioned methods for treating for charging the spacer particles.

The charged ink is obtained by dissolving the above-mentioned charged substance in various kinds of liquids capable of dissolving the substance or dispersing them in various kinds of liquids incapable of dissolving the substance. In the case the charged substance is dispersed, it is done so as to adjust the particle diameter to be 1 $\mu$m or less. If it exceeds 1 $\mu$m, it becomes difficult to keep the droplet amount of the charged ink small. A method of processing the particle diameter to be 1 $\mu$m or less in advance may include a method of making the particle diameter 1 $\mu$m or less by emulsion polymerization or a method of treatment of the charged substance for making the particle diameter 1 $\mu$m or less afterward by variety of milling method (by roll mill or salt milling).

The liquid to dissolve or disperse the charged substance therein or may be various kinds of reactive compounds in liquid phase such as solvents, various kinds of monomers and oligomers. The charged ink is dried or cured to become in not-liquid state by heating or energy by light radiation and the like after ejected.

It is preferable that the substance obtained by drying or curing the charged ink is not easily dissolved or dispersed in the spacer particle dispersion to be ejected next.

The preferable ranges of the viscosity and the surface tension of the charged ink differ depending on various kinds of the ink-jet apparatuses, however the viscosity is generally 0.5 to 40 mPa•s and the surface tension is 18 to 50 mN/m. The viscosity of the above-mentioned charged ink may be within the above-mentioned range at the head temperature of the ink-jet apparatus at the time of ejection and even if the viscosity is high at a room temperature, the ink can be used while being heated.

In the method of producing a liquid crystal display of the first invention, the spacer particles can be arranged in the light shielding regions or the regions corresponding to the light shielding regions by carrying out electrostatic charge treatment for the spacer particles in the spacer particle dispersion and additionally placing a wiring material which is a electrostatically chargeable material entirely or partially in the light shielding regions or the regions corresponding to the light shielding regions of a substrate and further electrostatically charging the wiring material made of the electrostatically chargeable material with opposite charge to that of the spacer particles subjected to the electrostatic charge treatment. Accordingly, when the substrate is used for the liquid crystal display, the spacer particles can be arranged in a narrow non-display parts at a high precision and the excellent liquid crystal display free from light leakage from the surrounding of the spacer particles and thus free from deterioration of the display image quality can be produce at a high efficiency.

The function is supposedly attributed to that the particles are shifted and adsorbed there in the droplets by the electrostatic interaction (so-called electrostatic electrophoretic effect).

The charged ink obtainable by dissolving a charged substance or dispersing a charged substance with a particle diameter of 1 μm or less is ejected and dried by ink-jet manner in the entire or partial portions of the light shielding regions or the regions corresponding to the light shielding regions and then the spacer particle dispersion obtainable by dispersing the spacer particles subjected to the electrostatic charge treatment is ejected to the positions including the positions where the charged ink is ejected and dried, so that charged ink obtainable by dissolving a charged substance or dispersing a charged substance with a particle diameter of 1 μm or less is ejected and dried at a high precision by ink-jet manner in the entire or partial portions of the light shielding regions or the regions corresponding to the light shielding regions and after drying, since the spacer particle dispersion containing spacer particles subjected to the electrostatic charge treatment is ejected in the positions including the positions where the charged ink is ejected and dried, along with the drying of the droplets of the spacer dispersion, the spacer particles gather in the regions where the charged ink is ejected and dried and thus the excellent liquid crystal display free from display image deterioration, e.g. light leakage from the surrounding of the spacer particles can be produced.

That is, when the spacer particle dispersion is ejected to the substrate in the case there is no region where the charged ink is ejected and dried, the spacer particles gather at any optional position in the deposition range (deposition diameter) on the substrate where the spacer dispersion is deposited, whereas in the case there are positions where the charged ink is ejected and dried, it is supposed that the spacer particles easily gather toward the positions where the charged ink is ejected and dried. That is, if the regions where the charged ink is ejected and dried can be made narrower, the precision of the gathering and arrangement of the spacer particles is further heightened.

The second invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the reducing contact angle (θr) of the spacer particle dispersion to the substrate, the spacer particle dispersion being ejected to, being 5° or more.

In the method of producing a liquid crystal display of the second invention, the reducing contact angle (θr) of the spacer particle dispersion to the substrate to which the spacer particle dispersion is ejected is 5° or more.

If the reducing contact angle is 5° or more, the droplets of the spacer particle dispersion deposited on the substrate are dried and shrunk toward the center and the spacer particles contained in at least one particle per the droplet can gather together in the center of the droplets. Accordingly, the mobility of the spacer particles tends to become easy and the arrangement precision of the spacer particles is further improved as described later.

If the above-mentioned reducing contact angle (θr) is less than 5°, it becomes difficult for the spacer particles to gather together in the center of the droplets along with drying and shrinking of the droplets around the center, the center (the deposition center) where the droplets are deposited on the substrate. As a result, in the case of producing the liquid crystal display using the spacer particle dispersion, it becomes difficult to selectively arrange the spacer particles in the regions corresponding to the light shielding regions at a high precision and the spacer particles are arranged even in the regions corresponding to the pixel portions and thus the display quality of the liquid crystal display cannot sufficiently be improved.

The above-mentioned reducing contact angle means the contact angle shown when a droplet of the spacer particle dispersion put on the substrate starts becoming smaller (when the droplet start shrinking) than the deposition diameter at the initial time when the droplet is put on the substrate or when 80 to 95% by weight of the volatile component in the droplet is evaporated during the time from putting to drying of the droplet.

In the process to accomplish the method of producing a liquid crystal display of the second invention, it is found that the above-mentioned reducing contact angle tends to become smaller as compared with so-called contact angle (an initial contact angle at the time when the droplet is put on the substrate and generally it is called as contact angle in almost all cases). That is, the initial contact angle is a contact angle of the droplet to the substrate on the substrate surface, which is not brought into contact with the solvent composing the spacer particle dispersion, whereas the reducing contact angle is supposed to be a contact angle of the droplet to the substrate on the substrate surface, which is brought into contact with the solvent composing the spacer dispersion. That is, in the case the reducing contact angle is considerably low as compared with the initial contact angle, it implies that the oriented film is damages by the solvent and therefore, it is found that it is not preferable to use such a solvent for the contamination of the oriented film.

According to the method of producing a liquid crystal display of the second invention in which the reducing contact angle ($\theta r$) of the spacer particle dispersion to the substrate to which the spacer particle dispersion is ejected is 5° or more, the spacer particles can be arranged selectively at a high precision in the light shielding regions or the regions corresponding to the light shielding regions of the substrate of the liquid crystal display and the method is capable of providing a liquid crystal display capable of displaying images with excellent display quality without occurrence of depolarizing attributed to the spacer particles or deterioration of contrasts and color tone owing to light blank.

Further, when the spacer dispersion containing at least one kind of organic solvents is used as the spacer particle dispersion and the reducing contact angle ($\theta r$) of the spacer particle dispersion of an organic solvent having the highest boiling point among the above-mentioned organic solvents to the substrate, the spacer particle dispersion being ejected to, is 5° or more, the above-mentioned effects are more assured.

The method of controlling the reducing contact angle to be 5° or more may include a method of adjusting the composition of the dispersion medium for the above-mentioned spacer dispersion and a method of making the surface of the substrate be a low energy surface.

To adjust the composition of the dispersion medium for the above-mentioned spacer dispersion, a medium having the reducing contact angle of 5° or more may be used alone or two or more of media may be used in form of a mixture, and it is preferable to use two or more media in form of a mixture since it is easy to adjust the dispersibility of the spacer particles and the workability and the drying speed of the spacer dispersion.

In the case two or more media are mixed and used for the above-mentioned spacer dispersion, it is preferable to mix media so that the medium having the highest boiling point has the reducing contact angle ($\theta r$) of 5° or more. If the reducing contact angle ($\theta r$) of the medium having the highest boiling point is lower than 5°, the droplet diameter becomes large in a latter half of the drying and in other word, the droplet wets and spreads on the substrate and it becomes difficult for the spacer to gather to the deposition center on the substrate.

The method for making the substrate surface be a low energy surface is not particularly limited and may include a method of forming a resin film having low surface energy such as a fluoro type resin film of fluoro type resin or a silicon type resin film of silicon resin and a method of utilizing the oriented film (generally a resin film with a thickness of 0.1 $\mu$m or thinner) to be formed on the substrate for regulating the orientation of the liquid crystal molecules itself for the potions having low surface energy. Among the methods, it is preferable to employ the method using the oriented film itself as the portions having low surface energy since the production process of liquid crystal display is simplified and the workability is high. The methods of making the substrate surface be a low energy surface may be used alone or a plurality of methods may be used in combination.

Generally a polyimide resin film is used for the above-mentioned oriented film. The polyimide resin film is produced by applying a polyamic acid soluble in an organic solvent and then thermally polymerizing the polyamic acid or by applying a soluble polyimide resin and then drying the resin. Among such polyimide resin films, polyimide resin films having long main chains and side chains are particularly preferably used for the portions having low surface energy.

The above-mentioned oriented film is subjected to surface rubbing treatment after coating formation so as to control the orientation of the liquid crystal. As the dispersion medium of the spacer dispersion, it is preferable to select those which do not contaminate the oriented film, e.g. dissolution of the oriented film.

In the method of producing a liquid crystal display of the second invention, the low energy surface is preferable to be formed in the region of at least one substrate where the spacer dispersion is ejected, that is the light shielding regions or the regions corresponding to the light shielding regions of the above-mentioned substrate.

The method of producing a liquid crystal display wherein the low energy surface is formed on the light shielding regions or the regions corresponding to the light shielding regions of at least one substrate, the spacer dispersion being ejected to, also constitutes one of the invention.

That is, the method of producing a liquid crystal display of the third invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited in a portion having a low energy surface formed in the light shielding region or the region corresponding to the light shielding region of at least one substrate, the droplet of the spacer particle dispersion being dried to keep the spacer particle in the light shielding region or the region corresponding to the light shielding region.

The portions having the low energy surface may be formed on the light shielding regions or the regions corresponding to the light shielding regions of only one substrate, or on the light shielding regions or the regions corresponding to the light shielding regions of both substrates.

The droplets of the spacer dispersion may be deposited only to the portions having the low energy surface formed in the light shielding regions or the regions corresponding to the light shielding regions of one substrate or may be depsoited only to the portions having the low energy surface formed in the light shielding regions or the regions corresponding to the light shielding regions of both substrates.

The surface energy (SE) of the portions having the low energy surface is preferably 45 mN/m or less and more preferably 40 mN/m or less.

If the surface energy of the portions having low surface energy exceeds 45 mN/m, as long as the spacer particle dispersion having a sufficient surface tension for ejection by an ink-jet apparatus is used, the droplets of the spacer particle dispersion considerably wet and spread on the portion having the low energy surface and as the drying is promote, the droplets become difficult to gather to the light shielding regions or the regions corresponding to the light shielding regions or the spacer particles in the droplets become hard to move to the light shielding regions or to the regions corresponding to the light shielding regions and therefore, the spacer particles may possibly come out of the light shielding regions or the regions corresponding to the light shielding regions of the substrate.

The portions having the low energy surface made of the above mentioned oriented film and the like may be formed partially on the light shielding regions or the regions corresponding to the light shielding regions of at least one substrate or may be formed entirely on the light shielding regions or the regions corresponding to the light shielding regions. Further, in consideration of the patterning step and the like, the regions may be formed on the entire faces of the substrates.

In the method of producing a liquid crystal display of the third invention, since the droplets of the spacer particle dispersion are deposited in portions having low surface energy and formed in the light shielding regions or the regions corresponding to the light shielding regions of at least one substrate and the droplets of the spacer dispersion are dried and the spacer particles are arranged selectively in the light shielding regions or the regions corresponding to the light shielding regions, the spacer particles can be arranged in the light shielding regions with a narrow width at a high precision in the case of producing a liquid crystal display and thus a liquid crystal display capable of displaying images with excellent display quality without occurrence of depolarizing attributed to the spacer particles or deterioration of contrasts and color tone owing to light blank can be produced.

Further, if there are portions having low surface energy in the light shielding regions or the regions corresponding to the light shielding regions of the substrate, the deposition diameter of the droplets of the spacer dispersion can be smaller, and therefore, during a drying step, the spacer particles can be gathered selectively and concentrically in the light shielding regions or the regions corresponding to the light shielding regions to obtain the above-mentioned excellent effects.

Further, the method of producing a liquid crystal display of the third invention provides more reliable and excellent effects by adjusting the surface energy of the portions with the low surface energy to be 45 mN/m or less and/or forming the portions having the low surface energy using the oriented film.

The method of producing a liquid crystal display of the fourth invention is a method of producing a liquid crystal display, which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited to include a portion different in level formed in the region corresponding to the light shielding region of at least one substrate, and being dried to keep the spacer particle in the region corresponding to the light shielding region.

In the method of producing a liquid crystal display of the fourth invention, portions different in level are formed in the light shielding regions or the regions corresponding to the light shielding regions in at least one substrate. The portions different in level mean the concavity and convexity (the height difference from the surrounding) unintentionally formed by the wiring and the like on the substrate or concavity and convexity intentionally formed for gathering the spacer particles and the structure and the shape of the portions different in level (concave and convex parts) and the structure of the concave and convex surface are not restricted. Accordingly, herein, the portions different in level mean the difference in level of concave parts or convex parts from the flat part (base level) in the concave and convex surface shape.

In the method of producing a liquid crystal display of the fourth invention the droplets of the spacer particle dispersion are deposited so as to include the portions different in level of the substrate. The method for depositing the droplets of the spacer particle dispersion so as to include the portions different in level of the substrate is not particularly limited and may be a method of hooking the droplets of the spacer particle dispersion on the portions different in level so as to include the portions different in level or a method of ejecting the droplets of the spacer particle dispersion aiming the portions different in level in the light shielding regions or the regions corresponding to the light shielding regions so as to include the portions different in level.

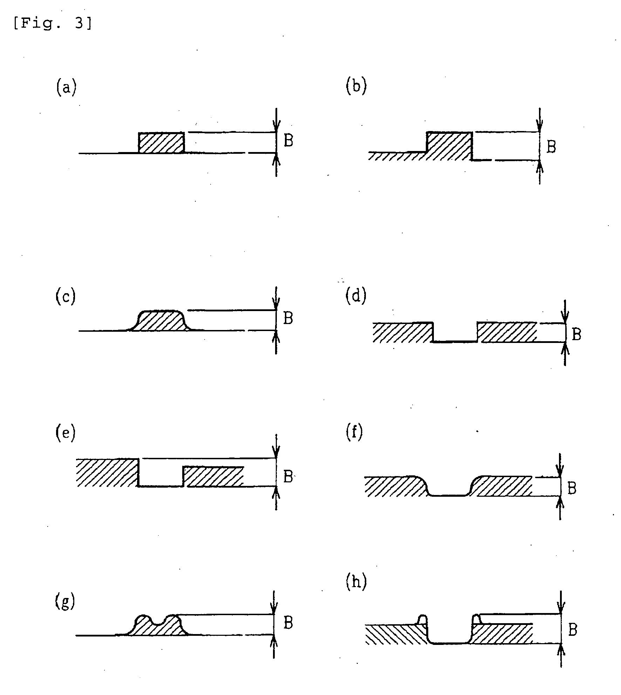

Fig. 3 shows a cross sectional view showing one example of the above-mentioned portions different in level. Actual examples of the portions different in level are, in an array substrate of a TFT liquid crystal panel as shown in Fig. 3, the difference in level owing to the gate electrode or the source electrode (about 0.2 $\mu$m, Fig. 3(a) to 3(c)); the difference in level owing to the array (about 1.0 $\mu$m, Fig. 3(g)), or in a color filter substrate, difference in level of the concave parts among pixel color filters on the black matrix (about 1.0 $\mu$m, Fig. 3(d) to 3(f), and 3(h)).

In the invention, it is preferable for the difference in level to satisfy the relationship, 0.01 $\mu$m < |B| < 0.95D, in the case D ($\mu$m) represents the particle diameter of the spacer particles and B ($\mu$m) represents the difference in level. If it is less than 0.01 $\mu$m, it sometimes becomes difficult to gather the spacers in the peripheries of the difference in level and if it exceeds 0.95D, the gap adjustment effect of the spacer particles for the substrates is difficult to obtain in some cases. In this case, the difference in level means the height of the convex parts to the flat part (base level) in the case the portions different in level are convex parts and the depth (low level) of the concave parts to the flat part (base level) in the case the portions different in level are concave parts.

Since the drying center of the deposited droplets of the spacer particle dispersion are seemingly fixed in the portions different in level during the final stage of the drying by forming the above-mentioned portions different in level in the light shielding regions or the regions corresponding to the light shielding regions on the substrate, the spacer particles can effectively be gathered at the very restricted positions in the peripheries of the portions different in level existing in the regions corresponding to the light shielding regions after the drying of the droplets of the spacer particle dispersion.

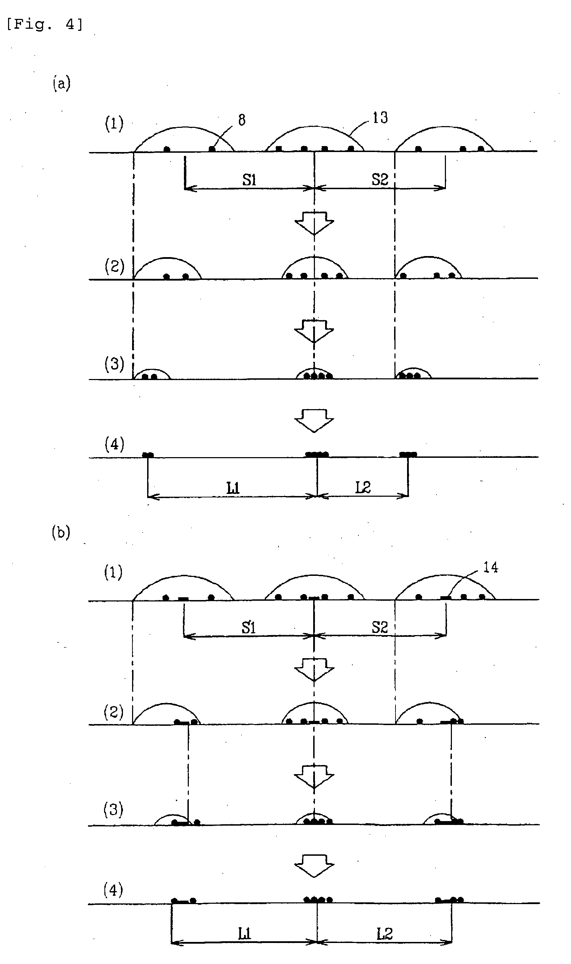

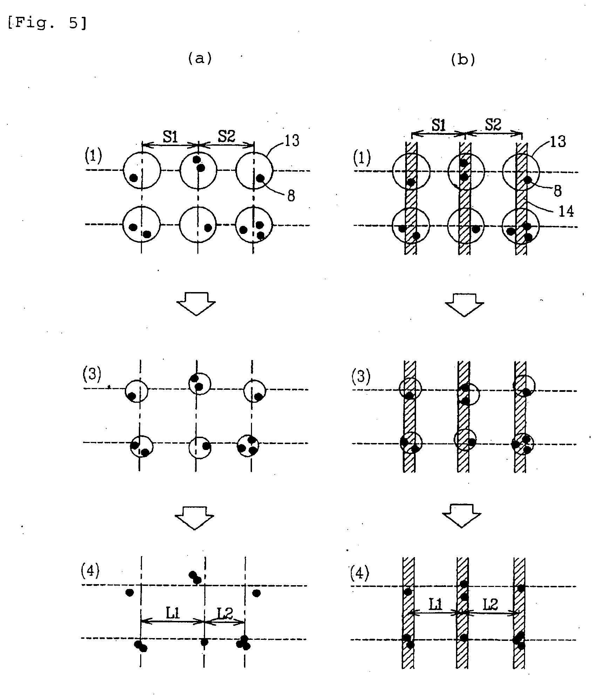

Fig. 4 is a schematic view showing a side view of the drying step and Fig. 4(a) shows the case there is not portions different in level and Fig. 4(b) shows the case there are portions different in level. Fig. 5 is a schematic view showing an overhead view of the drying step and Fig. 5(a) shows the case there is not portions different in level and Fig. 5(b) shows the case there are portions different in level.
As shown in Fig. 4(a) and Fig. 5(a), in the case there is no portion different in level, even if the spacer particle dispersion is ejected at constant intervals (S1 = S2) on the regions corresponding to the light shielding regions, some points of the end portions of the droplets are fixed for any reason during the drying step (in Fig. 4(a), the left ends of respective droplets other than the droplet 14 in the center are fixed during the drying) and even if the spacer particles 8 gather together in respective one points after the drying, the intervals are not constant (L1 ≠ L2) and the spacer particles 8 come out to the pixel regions. On the other hand, as shown in Fig. 4(b) and Fig. 5(b), in the case there are portions different in level 14, even if some points of the end parts of the droplets 13 are fixed for any reason during the drying step, as the drying step proceeds further, the end parts of the droplets 13 are fixed in the portions different in level 14 in this case. Since the fixing force in the portions different in level 14 is strong, the former fixation of the end parts of the droplets 13 is released and finally drying is promoted in the manner that the droplets include the portions different in level 14 and therefore, the spacer particles 8 after the drying gather at respective one points and the intervals become approximately constant (L1 ≈ L2) and the spacer particles never come out to the pixel regions.

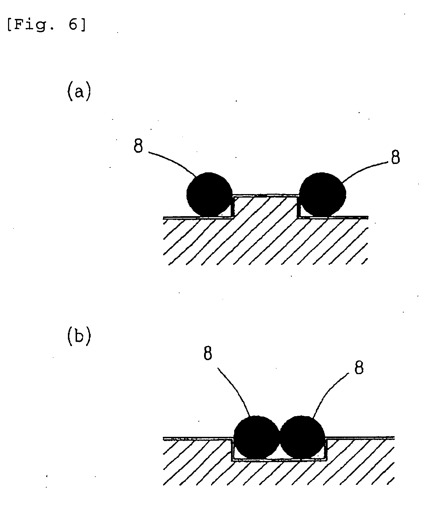

Fig. 6 is a schematic view showing the state that the spacer particles are left in the portions different in level and Fig 6(a) shows the state that the spacer particles are left in the convex parts and Fig. 6(b) shows the state that the spacer particles are left in the concave parts. The positions where the spacer particles 8 are finally left after the drying are often, as shown in Fig 6(a), the corners of the convex parts if the portions different in level are convex parts, and as shown in Fig. 6(b), they are often the insides of the concave parts if the portions different in level are concave parts.

Further, in the case the portions different in level are formed owing to the wiring or in the case the portions different in level are formed while sandwiching thin films such as oriented films in the periphery of the wiring and the like, it is supposed that since a metal exists, if the spacer particles are surface-modified or contain a charge control agent, the spacer particles in the droplets are moved and attracted to there owing to the electrostatic interaction, so-called electrostatic electrophoretic effect. In this case, it is made possible to electrostatically gather the spacer particles by changing the type of the metal of the wiring and the like; changing the functional groups and the like of the compound to be used for the surface modification, e.g. using ionic functional groups; adjusting and adding the type of the charge control agent; or applying positive or negative voltage proper not to damage the circuit to the wiring such as the source wiring and gate wiring or to the entire surface of the substrate, and the like.

In the above-mentioned manner, the method of producing a liquid crystal display of the fourth invention in which the portions different in level are formed in the light shielding regions or the regions corresponding to the light shielding regions of at least one substrate is capable of arranging the spacer particles at a high precision in the light shielding regions with a narrow width of a liquid crystal display since the droplets of the spacer particle dispersion are deposited so as to include the portions different in level formed in the light shielding regions or the regions corresponding to the light shielding regions of at least one substrate and dried and thereby the spacer particles are selectively arranged in the light shielding regions or the regions corresponding to the light shielding regions and accordingly the method can highly efficiently produce a liquid crystal display capable of displaying images with excellent display quality without occurrence of depolarizing attributed to the spacer particles or deterioration of contrasts and color tone owing to light blank.

Further, if the portions different in level exist in the light shielding regions or the regions corresponding to the light shielding regions of the substrate, since the drying center of the deposited droplets of the spacer particle dispersion are seemingly fixed in the portions different in level during the final stage of the drying, the spacer particles can selectively be gathered at the very restricted positions in the peripheries of the portions different in level existing in the regions corresponding to the light shielding regions after the drying of the droplets of the spacer particle dispersion deposited so as to include portions different in level formed in the light shielding regions or the regions corresponding to the light shielding regions of the substrate and accordingly the above mentioned excellent effects can be achieved.

Further, the above-mentioned excellent effects are more assured by controlling the height difference of the portions different in level, the droplets of the spacer particle dispersion being deposited to, to be within 0.01 $\mu$m < $|B|$ < 0.95D, in the case D ($\mu$m) represents the particle diameter of the spacer particles and B ($\mu$m) represents the height difference of the portions different in level.

As described, according to the method of producing a liquid crystal display of the first, the second, the third, or the fourth invention, it is made possible to efficiently, highly precisely, and selectively arrange the spacer particles in the light shielding regions (non-display parts) of a substrate for a liquid crystal display or the regions corresponding to the light shielding regions by an ink jet apparatus and it is made possible to produce a liquid crystal display capable of displaying images with excellent display quality without occurrence of depolarizing attributed to the spacer particles or deterioration of contrasts and color tone owing to light blank.

It is preferable to employ the production methods of a liquid crystal display of the first, the second, the third, and the fourth invention in combination, since the above-mentioned effects are made more excellent.

That is, in the method of producing a liquid crystal display of the invention, the spacer particle dispersion containing the spacer particles subjected to the electrostatic charge treatment is preferable to have a reducing contact angle ($\theta$r) of the spacer particle dispersion to the substrate to which the spacer particle dispersion is ejected is 5° or more. Further, it is preferable that such a spacer particle dispersion is deposited to the potions having low surface,energy formed in the light shielding regions or the regions corresponding to the light shielding regions of at least one substrate and so deposited as to include the portions different in level formed in the light shielding regions or the regions corresponding to the light shielding regions of the above-mentioned substrate.

Further, in the method of producing a liquid crystal display of the invention, it is preferable that there are portions different in level having low surface energy in the light shielding regions or the regions corresponding to the light shielding regions of the substrate to which the spacer particle dispersion is ejected and a charged ink is ejected there and dried and then the spacer particle dispersion containing the spacer particles subjected to the electrostatic charge treatment and having the reducing contact angle ($\theta$r) of 5° or more to the substrate is deposited.

In the method of producing a liquid crystal display of the invention, the ink jet apparatus to eject the spacer particle dispersion is not particularly limited and ink jet apparatus of a piezo type for ejecting a liquid by vibration of a piezo element and of a thermal type for ejecting a liquid by utilizing the liquid expansion by sharp heating can be employed. The nozzle diameter of the ink jet apparatus is preferable to be at least 7 times as wide as the particle diameter of the spacer particles. If it is less than 7 times as wide, it is not preferable, since the nozzle diameter is so small relatively to the particle diameter of the spacer particles that the ejection precision could be lowered or in an extreme case, the nozzle is blocked to make ejection impossible.

The reason for decrease of the ejection precision is supposed to be as follows.

That is, in the case of a piezo type, ink is sucked to an ink chamber formed in the vicinity of the piezo element or ink is ejected though the nozzle tip by vibration of the piezo element. As a method of ejecting liquid droplets, there are a drawing method by which the meniscus (the interface of the ink and a gas) of the nozzle tip end is drawn immediately before ejection and then pushing out the liquid and a pushing method by which a liquid is directly pushed out from the position where the meniscus is kept still and in general ink jet apparatuses, the former drawing method is in mainstream and this method is characterized in that small droplets can be ejected.

In the method of producing a liquid crystal display of the invention, at the time of ejecting the spacer particles, it is required that the nozzle diameter is large enough to a certain extent and the nozzle is capable of ejecting small droplets and therefore, the drawing method is effective. However, in the case of the drawing method, since the meniscus is drawn immediately before ejection, in the case the nozzle diameter is small (the nozzle aperture diameter is smaller than 7 time as wide as the particle diameter) (reference to Fig. 2(a)), if the spacer particles exist in the periphery of the drawn meniscus, the meniscus cannot be drawn axially symmetrically and therefore, at the time of pushing out after drawing, the droplets cannot move straight forward but curves to supposedly result in decrease of the ejection precision. In the case the nozzle diameter is large (the nozzle aperture diameter is at least 7 time as wide as the particle diameter) (reference to Fig. 2(b)), even if the spacer particles exist in the periphery of the drawn meniscus, the ejection is not affected by the spacer particles and the meniscus is axially symmetrically drawn and at the time of ejection after drawing, the droplets move straight forward and thus the ejection precision is supposed to be excellent. However, to eliminate curving of the droplets at the time of ejection, if the nozzle diameter is unnecessarily made wide, the droplets to be ejected are also enlarged and the deposition diameter also becomes large and therefore, the precision of the arrangement of the charged ink and the spacer particles is worsened.

The quantity of the droplets to be ejected from the nozzle is preferably 10 to 80 pL.
The method of controlling the quantity of the droplets may be a method of optimizing the nozzle aperture diameter and a method of optimizing the electric signals for controlling an ink jet head. The latter method is particularly important in the case a piezo type ink jet apparatus is employed.

In the ink jet apparatus, a plurality of nozzles as described above are installed in a prescribed arrangement manner in an ink-jet head [a plurality of nozzles(e.g. 64 pieces or 128 pieces) at equal intervals in the direction at right angles to the head moving direction. In some cases the nozzles are arranged in a plurality of rows, e.g. 2 rows]. The intervals of the nozzles are restricted by the structure of the piezo element or the nozzle diameter. Accordingly, in the case the spacer particle dispersion is ejected to the substrate at intervals other than that of the nozzle arrangement, since it is difficult to prepare heads for each ejection interval, in the case the intervals are narrower than the head, the head generally positioned at right angles to the scanning direction of the head is inclined (turned) (in the plane parallel to the substrate while being kept in parallel to the substrate) and in the case the intervals are wider than the head, the nozzles are not all used and only prescribed nozzles are used for the ejection and additionally the head may be inclined for the ejection. To improve the productivity, a plurality of heads with such structure can be installed to the ink jet apparatus, however if the number of the installations is increased, it becomes complicated in terms of the control and therefore, careful attention is required.

In the method of producing a liquid crystal display of the invention, the spacer particle dispersion is preferable to be ejected to the substrate at an interval defined by the following formula (1) or wider. The interval is the shortest interval between the droplets in the case before the deposited droplets of the spacer particle dispersion are dried, the droplets of the next time are ejected.

[formula 1]

$$35 \times \left( \frac{D}{\left(2 - 3\cos\theta + \cos^3\theta\right)} \right)^{\frac{1}{3}} \quad (\mu m) \qquad (1)$$

in the formula, D represents the particle diameter ($\mu$m) of the spacer particles and $\theta$ represents the contact angle of the spacer particle dispersion to the substrate face.

If the ejection is to be carried out at intervals narrower than the formula (1), the droplet diameter is left as large as it is and the deposition diameter also becomes large to cause agglomeration of the droplets and the gathering of the spacer particles toward one point during the drying step is not caused and accordingly, it occurs a problem that the arrangement precision of the spacer particles after drying is lowered. On the other hand, in the case the nozzle diameter is narrowed so as to make the ejection amount of the droplets small, the particle diameter of the spacer particles becomes relatively large to the nozzle diameter and as described before, stable ejection of the spacer particles (constantly straight forward in one direction) from the ink-jet head nozzle cannot be done and the precision of the deposition position is deteriorated owing to the flying curve. Additionally, the nozzles may possibly be clogged with the spacer particles.

The arrangement number (the spread density) of the spacer particles ejected and arranged on the substrate in the manner as the expression (1) is preferably 50 to 350 particles/mm$^2$. As long as the particle density is within the above-mentioned range, the spacer particles may be arranged in any patterns and any portions in the light shielding regions defining the pixel regions such as the black matrix or the regions corresponding to the light shielding regions such as wiring, however to prevent the spacer particles from coming out to the display parts (pixel regions), it is more preferable to arrange them at the points corresponding to the lattice points of lattice like light shielding regions in one substrate in the case of color filters composed of lattice like light shielding regions (regions defining the pixel regions).

Although it differs depending on every arrangement point, the number of the spacer particles at one arrangement point is generally 0 to 12 particles and about 2 to 6 in average. The average number of the particles is adjusted depending on the particle diameter of the spacer particles and the concentration of the spacer particle dispersion.

Further, to eject the spacer particle dispersion and deposit the droplets on the substrate, scanning of the ink-jet head may be carried out only one time or in a plurality of times. Especially, if the intervals for the arrangement of the spacer particles are narrower than that defined as the formula (1), the ejection may be carried out at intervals as wide as integer times and then drying is done once and then ejection may be carried out again while shifting by the intervals. With respect to the moving (scanning) direction, the ejection may be carried out in different directions every time (reciprocating ejection) and also the ejection is carried out only in the movement in one direction (unidirectional ejection).

Further, as an arrangement method described in Japanese Patent Application 2000-194956, a head is so inclined as to have an angle to the vertical line to the substrate face and the ejection direction of the droplets is changed (generally in parallel to the vertical line to the substrate face) and the relative speed of the head and the substrate is controlled, so that the diameter of the droplets can be made small and the spacer can be kept more precisely in the light shielding regions or the regions corresponding to the light shielding regions.

Next, the drying step of the medium (a solvent, a medium) in the spacer particle dispersion after the spacer particle dispersion is deposited will be described.

The conditions for drying in the method of producing a liquid crystal display of the invention are not particularly limited and heating the substrate or blowing hot air can be exemplified and to gather the spacer particles in the vicinity of the center of the deposited droplets during the drying step, it is preferable to properly set the boiling point of the medium, the drying temperature, the drying duration, the surface tension of the medium, the contact angle of the medium to the oriented film, the concentration of the spacer particles, and the like.

To gather the spacer particles in the deposited droplets during the drying step, drying is carried out for a proper time duration so as to avoid elimination of the liquid during the time the spacer particles move on the substrate. Therefore, it is not preferable for the condition of sharply drying out the medium. Further, when the medium is brought into contact with the oriented film at a high temperature for a long time, it contaminates the oriented film and it may possibly results in deterioration of the display image of the liquid crystal display and therefore, it is not preferable.

As the medium, a medium which is easily evaporated in room temperature is used or the medium is used in the condition in which the medium is extremely evaporated, the spacer particle dispersion in the vicinity of the nozzle of the ink jet apparatus tend to be dried and the ink jet ejecting property is deteriorated and therefore, it is not preferable. Further, it is possible that agglomerated particles are produced attributed to drying at the time of producing the dispersion or in a tank and therefore it is not preferable.

Even in the condition that the substrate temperature is relatively low, if the drying time takes considerably long, the productivity of the liquid crystal display is decreased and therefore it is not preferable.

In the method of producing a liquid crystal display of the invention, the substrate surface temperature at the time when the spacer particle dispersion is deposited on the substrate is preferable to be lower by 20°C or more than the boiling point of the medium having the lowest boiling point among the media contained in the dispersion. If the temperature is higher than that lower by 20°C than the boiling point of the medium having the lowest boiling point, the medium having the lowest boiling point is so sharply evaporated as to make the spacer particles impossible to move and in an extreme case, sharp boiling of the medium occurs and the medium moves together with the droplets on the substrate to result in considerable deterioration of the arrangement precision of the spacer particles, and therefore it is not preferable.

Further, in the case the substrate temperature is gradually increased to dry the medium after the spacer particle dispersion is deposited on the substrate, the substrate surface temperature is preferably 90°C or lower, more preferably 70°C or lower until the time of completion of the drying. If the substrate surface temperature exceeds 90°C until the time of completion of the drying, the medium contaminates the oriented films and consequently, the display image quality of the liquid crystal display is deteriorated, and therefore it is not preferable.

The completion of drying in the method of producing a liquid crystal display of the invention means the moment when the droplets on the substrate disappear.

After that, to increase the fixation force of the spacer particles to the substrate or to remove the remaining solvents, the substrate may be heated at a higher temperature (about 120 to 230°C).

The substrate with the spacer particles arranged according to the method of producing a liquid crystal display of the invention is press bonded to a counter substrate with a peripheral sealing agent and then a liquid crystal is packed in the gap formed between the substrates to produce the liquid crystal display.

EFFECT OF THE INVENTION

According to the method of producing a liquid crystal display of the invention, spacer particles can be arranged efficiently, highly precisely and selectively in light shielded regions (non-display parts) or the regions corresponding to the light shielded regions of a substrate for a liquid crystal display by using an ink jet apparatus and a liquid crystal display capable of displaying images with excellent display quality without occurrence of depolarizing attributed to the spacer particles or deterioration of contrasts and color tone owing to light blank can be produced.

BEST MODE FOR CARRYING OUT THE INVENTION

Hereinafter, the invention will be described more in details along with examples, however it is not intended that the invention be limited to the these examples.

(Examples 1 to 13)

Liquid crystal displays were produced by the following method using the spacer particle dispersions and substrates shown in Table 1.

(Preparation of spacer particles)

Divinylbenzene 15 part by weight, isooctyl acrylate 5 part by weight, and benzoyl peroxide as a polymerization initiator 1.3 part by weight were evenly mixed in a separable flask and then an aqueous solution of 3% polyvinyl alcohol (GL-03, manufactured by Kuraray Co., Ltd.) 20 part by weight and sodium dodecylsulfate 0.5 part by weight were added and stirred well and further ion-exchanged water 140 part by weight was added. The obtained solution was subjected to reaction at 80°C in nitrogen gas current for 15 hours while being stirred. After being washed with hot water and acetone, the obtained particles were classified and acetone was evaporated to obtain spacer particles (S). The average particle diameter of the obtained particles was 4.0 $\mu$m and CV value was 3.0%.

(Surface modification of the spacer particles)

The obtained spacer particles (S) 5 part by weight were added to dimethyl sulfoxide (DMSO) 20 part by weight, hydroxymethyl methacrylate 2 part by weight, and N-ethylacrylamide 18 part by weight and evenly dispersed by a sonicater and then nitrogen gas was introduced into the reaction system and the reaction system was continuously stirred at 30°C for 2 hours.
Next, a 0.1 mol/L ceric ammonium nitrate solution 10 part by weight adjusted with an aqueous 1N nitric acid solution was added and the reaction was continued for 5 hours. on completion of the reaction, the obtained particles and the reaction solution were separated by filtration with a 2 $\mu$m membrane filter. The particles were sufficiently washed with ethanol and acetone and vacuum-dried by a vacuum drying apparatus to obtain spacer particles SA.
Also, spacer particles SB were obtained from the obtained spacer particles (S) 5 part by weight, dimethyl sulfoxide (DMSO) 20 part by weight, hydroxymethyl methacrylate 2 part by weight, methacrylic acid 16 part by weight, and lauryl acrylate 2 part by weight and spacer particles SC were obtained in the same manner using dimethyl sulfoxide (DMSO) 20 part by weight, hydroxymethyl methacrylate 2 part by weight, and polyethylene glycol methacrylate (molecular weight 800) 18 part by weight.

(Preparation of spacer particle dispersion)

Needed amounts of the obtained spacer particles so as to have prescribed particle concentrations were weighed and slowly added to the media with the compositions shown in Table 1 and sufficiently stirred by a sonicater to disperse them in the media and then filtered with a stainless mesh with mesh size of 10 $\mu$m to remove agglomerates and obtain spacer dispersions S1 to S6.
The zeta potentials of the obtained spacer dispersions were measured by a method disclosed in "Colloid Chemistry IV, Colloid Chemistry Experimental Methods, Chemical Society of Japan, Tokyo Kagaku Dojin, p. 217 (1996)".
The results are shown in Table 1. The properties of the media employed are shown in Table 2.

(Production of substrate)

As substrates for a liquid crystal test panel were used a color filter substrate and a substrate (a TFT array model substrate) similarly having difference in level existing in a TFT array substrate.

The color filter substrate was obtained by forming a black matrix (width: 25 $\mu$m; vertical intervals: 150 $\mu$m; transverse intervals 75 $\mu$m; and thickness 0.2 $\mu$m) of metal chromium on a glass substrate by a conventional method and forming color filter pixels of RGB three colors (thickness: 1.5 $\mu$m) in the matrix. An overcoat layer and an ITO transparent electrode were formed thereon and further a solution containing polyimide (Sunever SE1211, manufactured by Nissan Chemical Industries, Ltd., surface tension ($\gamma$): 26 mN/m) was evenly applied thereto by a spin coating method and dried at 80°C and then fired at 190°C for 1 hour to be cured and an oriented film was formed.

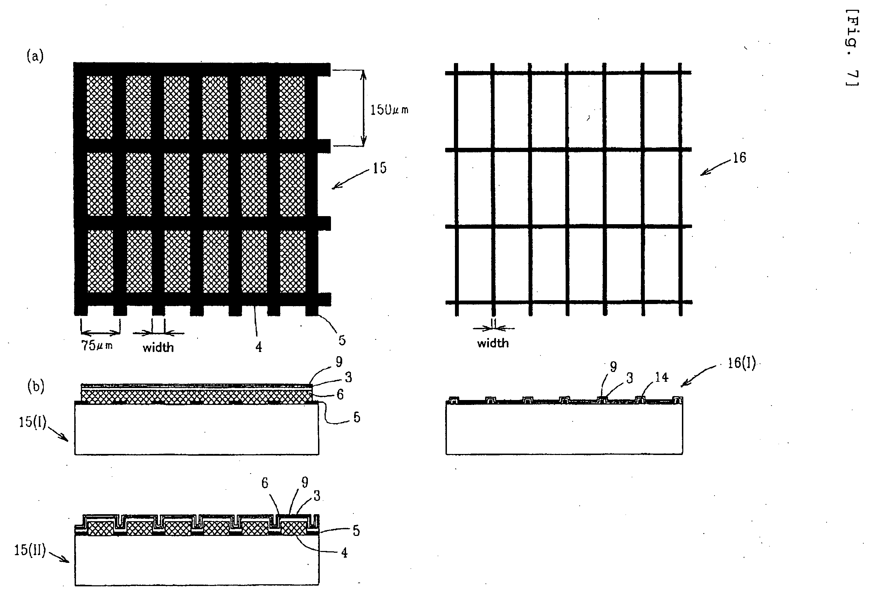

In this case, depending on the difference of the intervals among the respective color pixel color filters, two different types of substrates, smooth surface substrates (reference to Fig. 7(b) 15(I)) and substrates having concave parts (difference in level (depth) 1.3 $\mu$m) (reference to Fig. 7(b) 15(II)), were produced.

The TFT array substrate was produced by forming wiring of copper (width 8 $\mu$m and thickness 0.2 $\mu$m) by a conventionally known method and forming an oriented film by the above-mentioned method (reference to Fig. 7(b) 16(I) from which the transparent electrode 3 is removed). In this case, substrates with difference in level of 0.005 ($\mu$m) and 1.0 ($\mu$m) were also produced.

(Spacer arrangement by ink-jet manner)

The above-mentioned TFT array model substrate was put on a stage heated at 45°C by an attached heater and by an ink-jet apparatus comprising a piezo type head having a 50 $\mu$m aperture diameter, a spacer dispersion was ejected at 110 $\mu$m intervals on every other vertical line aiming to the difference in level corresponding to the black matrix of the color filter to arrange spacer particles at vertically 110 $\mu$m x transversely 150 $\mu$m pitches and dried. The gap between the nozzle (the head face) and the substrate at the time of ejection was set to be 0.5 mm and a double pulse method was employed. Until the time when the drying was carried out, -3V potential (the potential relative to the earth was applied and other apparatuses were all earthed) was applied to the copper wiring of the TFT array model substrate. After it was confirmed that the spacer dispersion ejected on the substrate on the stage was completely dried by eye observation, the remaining medium was further removed and to firmly fix the spacer particles in the substrate, the substrate was shifted to a hot plate at 150°C and heated and left still for 15 minutes. The dispersion density of the spacer particles arranged in such a manner was 180 particles/mm$^2$ and the average number of the spacer particles was 3.0 particles/dot.

(Production of liquid crystal display cell for evaluation)

The TFT array model substrate in which the spacer particles were arranged in the above-mentioned manner and a color filter substrate to be a counter substrate were stuck to each other through a sealing agent in the peripheries of the substrates and the sealing agent was heated at 150°C for 1 hour to be cured to form an empty cell having a cell gap equal to the particle diameter of the spacer particles and then a liquid crystal was packed by a vacuum method and an injection inlet was sealed by an end-sealing agent to produce a liquid crystal display cell.

(Evaluation)

The following items were evaluated and the results are shown in Table 1.

(Spacer particle spray density)

After the spacer particles were fixed in the substrate, the number of spacer particles sprayed per 1 mm$^2$ was observed to determine the spray density.

(Average number of spacer particles)

The average value of the number of spacer particles agglomerated per one arrangement in 1 mm$^2$ area was defined as the average number of spacer particles. In this connection, the mark - in Table 1 shows that no agglomeration was observed.

(Precision of spacer particle arrangement)

The arrangement state of spacer particles after the droplets were dried were judged according to the following standard.

○: Almost all of the spacer particles were in the light shielding regions.
Δ: Some of spacer particles were at positions out of the light shielding regions.
×: Many spacer particles were at positions out of the light shielding regions.

(Spacer arrangement precision)

Parallel lines at equal intervals in both sides from the center of a black matrix or a portion corresponding to the black matrix were drawn and the distance of neighboring two parallel lines where 95% in number of spacer particles or more existed was defined as the spacer particle existence range.

(Display image quality)

The positions of the spacer particles were observed and the judgment was done according to the following standard.

○: The spacer particles were scarcely observed in the display regions and no light blank attributed to the spacer particles was caused.
Δ: A small number of spacer particles were observed in the display regions and light blank attributed to the spacer particles was caused.
x: Spacer particles were observed in the display regions and light blank attributed to the spacer particles was caused.

[Table 1]

| | | | | Example | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Spacer dispersion | | type | | S1 | S2 | S2 | S2 | S3 | S3 | S4 | S5 | S5 | S5 | S6 | S7 | S8 |
| | spacer | type | | SA | SB | SB | SB | SC | SC | SA | SB | SB | SB | SC | S | S |
| | | addition amount | (g) | 0.25 | 0.25 | 0.25 | 0.25 | 0.25 | 0.25 | 0.25 | 0.25 | 0.25 | 0.25 | 0.25 | 0.25 | 0.25 |
| | solvent | 2-propanol | (g) | 15 | 15 | 15 | 15 | 10 | 10 | 15 | 15 | 15 | 15 | 15 | 15 | 15 |
| | | water | (g) | 15 | 85 | 85 | 85 | – | – | 5 | 15 | 15 | 15 | 15 | 15 | 70 |
| | | ethylene glycol | (g) | 65 | – | – | – | 90 | 90 | 80 | 65 | 65 | 65 | 70 | 65 | 15 |
| | | 1,4-butanediol | (g) | – | – | – | – | – | – | – | 5 | 5 | 5 | – | – | – |
| | | diethylene glycol | (g) | 5 | – | – | – | 5 | – | – | – | – | – | – | 5 | – |
| | zeta potential | | (mV) | +30 | –35 | –35 | –35 | –20 | –20 | +28 | –33 | –33 | –33 | –22 | –10 | –15 |
| Substrate | substrate to receive dispersion ejection | type | | 15 | 15 | 15 | 15 | 15 | 15 | 15 | 15 | 14a | 14a | 15 | 14a | 14a |
| | | difference in level | (mm) | 5 | 5 | 5 | 5 | 5 | 5 | 5 | 5 | 0 | 0 | 5 | 0 | 0 |
| | counter substrate | type | | 15(I) | 15(I) | 15(I) | 15(I) | 15(I) | 15(I) | 15(I) | 15(II) | 16 | 16 | 15(I) | 16 | 16 |
| | | difference in level | (mm) | 0 | 0 | 0 | 0 | 0 | 0 | 0 | 2 | 5 | 5 | 0 | 5 | 5 |
| Applied potential | | | (V) | –3 | 0 | +3 | +5 | 0 | +3 | –3 | –3 | 0 | +3 | +3 | 0 | 0 |
| Results | spacer spray density (particles/mm$^2$) | | | 180 | 180 | 175 | 205 | 205 | 180 | 180 | 210 | 195 | 185 | 195 | 190 | 200 |
| | average number of spacer particles (particles/dot) | | | 3.0 | 3.0 | 3.0 | 3.3 | 3.3 | 3.0 | 3.0 | 3.4 | 3.1 | 3.1 | 3.1 | 3.1 | 3.4 |
| | precision of spacer arrangement | | | O | O | O | O | O | O | O | O | O | O | O | △ | △ |
| | spacer existence range | | ($\mu$m) | 20 | 25 | 19 | 18 | 25 | 22 | 21 | 20 | 25 | 21 | 22 | 32 | 45 |
| | display image quality | | | O | O | O | O | O | O | O | O | O | O | O | △ | △ |

21

[Table 2]

|  | Boiling point (°C) | Viscosity (mPa·s) | Surface tension (mN/m) |
|---|---|---|---|
| 2-propanol | 82 | 2.4 | 21.7 |
| Water | 100 | 1.0 | 72.6 |
| Ethylene glycol | 198 | 23 | 46.5 |
| 1,4-butanediol | 229 | 88 | 45.3 |
| Diethylene glycol | 245 | 35 | 48.5 |

As shown in Table 1, in Examples 1 to 11, almost all of the spacer particles were arranged highly precisely in non-display regions and the display quality was excellent. In Examples 12 and 13, although the arrangement precision was inferior to that of Examples 1 to 11, the display quality was excellent.

(Examples 14 to 26)

(Preparation of spacer particles)

Divinylbenzene 15 part by weight, isooctyl acrylate 5 part by weight, and benzoyl peroxide as a polymerization initiator 1.3 part by weight were evenly mixed in a separable flask and then an aqueous solution of 3% polyvinyl alcohol (GL-03, manufactured by Kuraray Co., Ltd.) 20 part by weight and sodium dodecylsulfate 0.5 part by weight were added and stirred well and further ion-exchanged water 140 part by weight was added. The obtained solution was subjected to reaction at 80°C in nitrogen gas current for 15 hours while being stirred.
After being washed with hot water and acetone, the obtained particles were classified to obtain spacer particles having an average particle diameter 4.0 $\mu$m and a CV value of 3.0%.

(Surface modification of the spacer particles)

The obtained spacer particles 5 part by weight were added to dimethyl sulfoxide (DMSO) 20 part by weight, hydroxymethyl methacrylate 2 part by weight, and N-ethylacrylamide 18 part by weight and evenly dispersed by a sonicater and then nitrogen gas was introduced into the reaction system and the reaction system was continuously stirred at 30°C for 2 hours. Next, a 0.1 mol/L ceric ammonium nitrate solution 10 part by weight adjusted with an aqueous 1N nitric acid solution was added and the reaction was continued for 5 hours. On completion of the reaction, the obtained particles and the reaction solution were separated by filtration with a 2 $\mu$m membrane filter. The particles were sufficiently washed with ethanol and acetone and vacuum-dried by a vacuum drying apparatus to obtain spacer particles SA. Also, spacer particles SB were obtained from the obtained spacer particles SA 5 part by weight, dimethyl sulfoxide (DMSO) 20 part by weight, hydroxymethyl methacrylate 2 part by weight, methacrylic acid 16 part by weight, and lauryl acrylate 2 part by weight and spacer particles SC were obtained in the same manner using dimethyl sulfoxide (DMSO) 20.part by weight, hydroxymethyl methacrylate 2 part by weight, and polyethylene glycol methacrylate (molecular weight 800) 18 part by weight.

(Preparation of spacer particle dispersion)

Needed amounts of the obtained spacer particles so as to have prescribed particle concentrations were weighed and slowly added to the media with the compositions shown in Table 3 and sufficiently stirred by a sonicater to disperse them in the media and then filtered with a stainless mesh with mesh size of 10 $\mu$m to remove agglomerates and obtain spacer dispersions S1 to S6. The zeta potentials of the obtained spacer dispersions were measured by a method disclosed in "Colloid Chemistry IV, Colloid Chemistry Experimental Methods, Chemical Society of Japan, Tokyo Kagaku Dojin, p. 217 (1996)".
The results are shown in Table 3.

(Preparation of fine particles and charged ink)

(Synthesis of fine particles A)

After styrene 64 mmol, butyl acrylate 32 mmol, tetraethylene glycol acrylate 14 mmol, and ion-exchanged water 36 g were put in a 100 mL separable flask equipped with a. four-necked separable cover, a stirring blade, a three-way cock, a condenser, and a temperature probe and the atmosphere was replaced with nitrogen for 45 minutes, as an initiator, 2,2'-azobis(2-amidinopropane) dihydrochloride 0.64 mmol was added and polymerization was carried out at 60°C for 6 hours in nitrogen atmosphere under condition of stirring at 200 rpm speed. On completion of the reaction, the agglomerated product was separated by filtration with a 100 mesh sieve.
The synthesized fine particles were centrifuged to remove the supernatant solution and again dispersed in ion-exchanged water. These steps were repeated three times to refine the fine particles and then the water dispersion of the fine particles was freeze-dried to obtain powder-like fine particles A having an average particle diameter 365 nm and a CV value of 5.0%.

(Synthesis of fine particles B)

After styrene 320 mmol, phenyl methacrylate dimethylsulfonium sulfate salt 3.2 mmol, and ion-exchanged water 160 g were put in a 500 mL separable flask equipped with a four-necked separable cover, a stirring blade, a three-way cock, a condenser, and a temperature probe and the atmosphere was replaced with nitrogen for 45 minutes, as an initiator, 2,2'-azobis(2-amidinopropane) dihydrochloride 3.2 mmol was added and polymerization was carried out at 60°C for 6 hours in nitrogen atmosphere under condition of stirring at 200 rpm speed.
On completion of the reaction, powder-like fine particles B having an average particle diameter 216 nm and a CV value of 3.3% were obtained in the same manner as the case of the fine particles A.

(Synthesis of fine particles C)

After styrene 64 mmol, butyl acrylate 15 mmol, acrylic acid 6 mmol, and ion-exchanged water 36 g were put in a 100 mL separable flask equipped with a four-necked separable cover, a stirring blade, a three-way cock, a condenser, and a temperature probe and the atmosphere was replaced with nitrogen for 45 minutes, as an initiator, potassium persulfate 0.64 mmol was added and polymerization was carried out at 60°C for 6 hours in nitrogen atmosphere under condition of stirring at 200 rpm speed.
On completion of the reaction, powder-like fine particles C having an average particle diameter 355 nm and a CV value of 5.5% were obtained in the same manner as the case of the fine particles A.

(Preparation of charged ink)

Needed amounts of the obtained fine particles so as to have prescribed particle concentrations were slowly added to the media with the compositions shown in Table 3 and sufficiently stirred by a sonicater to disperse them in the media and then filtered with a stainless mesh with mesh size of 10 $\mu$m to remove agglomerates and obtain charged inks E1 to E5. The zeta potentials of the obtained charged inks were measured by the same method described above. The results are shown in Table 3.
Further, a charged ink E6 was produced by using as fine particles D, cationic polyethylene imine, molecular-dispersed (dissolved) in 0.05% by weight in water/2-propanol (weight ratio 70/30).

(Production of substrate)

As substrates for a liquid crystal test panel were used a color filter substrate and a substrate (a TFT array model substrate) similarly having difference in level existing in a TFT array substrate.

(Color filter substrate)

The color filter substrate was obtained by forming a black matrix (width: 25 $\mu$m; vertical intervals: 150 $\mu$m; transverse intervals 75 $\mu$m; and thickness 0.2 $\mu$m) of metal chromium on a glass substrate by a conventional method and forming color filter pixels of RGB three colors (thickness: 1.5 $\mu$m) in the matrix. An overcoat layer and an ITO transparent electrode were formed thereon and further a solution containing polyimide (Sunever SE1211, manufactured by Nissan Chemical Industries, Ltd., surface tension ($\gamma$): 26 mN/m) was evenly applied thereto by a spin coating method and dried at 80°C and then fired at 190°C for 1 hour to be cured and an oriented film was obtained.
In this case, depending on the difference of the intervals among the respective color pixel color filters, two different types of substrates, smooth surface substrates (reference to Fig. 7(b) 15(I)) and substrates having concave parts (difference in level (depth) 1.3 $\mu$m) (reference to Fig. 7(b) 15(II)), were produced.

(TFT array substrate)

The TFT array substrate was produced by forming difference in level of copper (width 8 $\mu$m and thickness 0.2 $\mu$m) at positions on a glass substrate facing to the black matrix of the color filter substrate by a conventionally know method and forming an ITO transparent electrode and the forming an oriented film by the above-mentioned method (reference to Fig. 7(b) 16(I)). In this case, substrates with difference in level of 0.005 ($\mu$m) and 1.0 ($\mu$m) were also produced.

Liquid-crystal display devices were produced by the following method using the charged inks, spacer particle dispersions, and substrates, which are shown in Table 3.

(Charged ink ejection and spacer arrangement by ink-jet manner)

The above-mentioned TFT array model substrate was put on a stage heated at 45°C by a heater using the charged inks, spacer particle dispersions, and substrates as shown in Table 3 and by an ink-jet apparatus comprising a piezo type head having a 25 $\mu$m aperture diameter, droplets of each charged ink were ejected at 110 $\mu$m intervals on every other vertical line aiming to the difference in level corresponding to the black matrix of the color filter to arrange spacer particles at vertically 110 $\mu$m x transversely 150 $\mu$m pitches and dried. The droplet amount at that time is shown in Table 3. The spread of the droplets on the substrate was about 20 $\mu$m when the droplet amount was 2 pL. The gap between the nozzle (the head face) and the substrate at the time of ejection was set to be 0.5 mm and a double pulse method was employed.

Next, the head was replaced with another head having a nozzle aperture diameter of 50 $\mu$m and then the spacer particle dispersion was ejected at the same positions and dried. The dispersion density of the spacer particles arranged in the obtained substrate was 180 particles/mm$^2$ and the average number of the spacer particles was 3.0 particles/dot.

After it was confirmed that the spacer dispersion ejected on the substrate on the stage was completely dried by eye observation, the remaining medium was further removed and the substrate was shifted to a hot plate at 150°C and heated and left still for 15 minutes to firmly fix the spacer particles in the substrate.

(Preparation of liquid crystal display cell for evaluation)

The TFT array model substrate in which the spacer particles were arranged in the above-mentioned manner and a color filter substrate to be a counter substrate were stuck to each other through a sealing agent in the peripheries of the substrates and the sealing agent was heated at 150°C for 1 hour to be cured to form an empty cell having a cell gap equal to the particle diameter of the spacer particles and then a liquid crystal was packed by a vacuum method and an injection inlet was sealed by a end-sealing agent to produce a liquid crystal display cell.

(Evaluation)

The following items were evaluated and the results are shown in Table 3.

(Spacer particle spray density)

After the spacer particles were fixed in the substrate, the number of spacer particles sprayed per 1 mm$^2$ was observed to determine the spray density.

(Average number of spacer particles)

The average value of the number of spacer particles agglomerated per one arrangement in 1 mm$^2$ area was defined as the average number of spacer particles. In this connection, the mark - shows that no agglomeration was observed.

(Precision of spacer particle arrangement)

The arrangement state of spacer particles after the droplets were dried were judged according to the following standard.

○: Almost all of the spacer particles were in the light shielding regions.
Δ: Some of spacer particles were at positions out of the light shielding regions.
x: Many spacer particles were at positions out of the light shielding regions.

(Spacer existence range)

Parallel lines at equal intervals in both sides from the center of a black matrix or a position corresponding to the black matrix were drawn and the distance of neighboring two parallel lines where 95% in number of spacer particles or more existed was defined as the spacer particle existence range.

(Display image quality)

The positions of the spacer particles were observed and the judgment was done according to the following standard.

o: The spacer particles were scarcely observed in the display regions and no light blank attributed to the spacer particles was caused.
Δ: A small number of spacer particles were observed in the display regions and light blank attributed to the spacer particles was caused.
x: Spacer particles were observed in the display regions and light blank attributed to the spacer particles was caused.

[Table 3]

| | | | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 | 26 |
| Charged ink | fine particles | type | E1 | E2 | E2 | E3 | E3 | E4 | E4 | E4 | E4 | E5 | E6 | - | - |
| | | type | A | B | B | C | C | A | A | A | A | B | D | - | - |
| | | addition amount (g) | 0.05 | 0.05 | 0.05 | 0.05 | 0.05 | 0.02 | 0.02 | 0.02 | 0.02 | 0.05 | 0.05 | - | - |
| | solvent | 2-propanol (g) | 10 | 15 | 15 | 15 | 15 | 10 | 10 | 10 | 10 | 15 | 70 | - | - |
| | | water (g) | | 15 | 15 | 15 | 15 | - | - | - | - | 85 | 30 | - | - |
| | | ethylene glycol (g) | 90 | 70 | 70 | 65 | 65 | 85 | 85 | 85 | 85 | - | - | - | - |
| | | 1,4-butanediol (g) | - | - | - | 5 | 5 | - | - | - | - | - | - | - | - |
| | | diethylene glycol (g) | - | - | - | - | - | 5 | 5 | 5 | 5 | - | - | - | - |
| | | zeta potential (mV) | +24 | +60 | +60 | -45 | -45 | +22 | +22 | +22 | +22 | +55 | - | - | - |
| | | ejection amount (pL) | 18 | 18 | 2 | 18 | 18 | 18 | 2 | 2 | 2 | 18 | 2 | - | - |
| Spacer dispersion | spacer | type | S3 | S2 | S2 | S3 | S1 | S4 | S5 | S5 | S5 | S6 | S2 | S2 | S6 |
| | | type | SC | SB | SB | SC | SA | SA | SB | SB | SB | SC | SB | SB | SC |
| | | addition amount (g) | 0.25 | 0.25 | 0.25 | 0.25 | 0.25 | 0.25 | 0.25 | 0.25 | 0.25 | 0.25 | 0.25 | 0.25 | 0.25 |
| | solvent | 2-propanol (g) | 10 | 15 | 15 | 10 | 15 | 15 | 15 | 15 | 15 | 15 | 15 | 15 | 15 |
| | | water (g) | - | 85 | 85 | - | 15 | 5 | 15 | 15 | 15 | 15 | 85 | 85 | 83 |
| | | ethylene glycol (g) | 90 | - | - | 90 | 65 | 80 | 65 | 65 | 65 | 70 | - | - | 2 |
| | | 1,4-butanediol (g) | - | - | - | - | - | - | - | - | - | - | - | - | - |
| | | diethylene glycol (g) | - | - | - | - | 5 | - | 5 | 5 | 5 | - | - | - | - |
| | | zeta potential (mV) | -20 | -35 | -35 | -20 | +30 | +28 | -33 | -33 | -33 | -22 | -35 | -35 | -33 |
| Substrate | substrate to receive dispersion ejection | type | 15(I) | 15(I) | 15(I) | 15(I) | 15(I) | 15(I) | 15(I) | 15(I) | 16 | 15(I) | 15(I) | 15(I) | 15(I) |
| | | difference in level (mm) | 0 | 0 | 0 | 0 | 0 | 0 | 0 | 2 | 5 | 0 | 0 | 0 | 0 |
| | counter substrate | type | 15 | 15 | 15 | 15 | 15 | 15 | 15 | 15 | 14a | 15 | 15 | 15 | 15 |
| | | difference in level (mm) | 5 | 5 | 5 | 5 | 5 | 5 | 5 | 5 | 0 | 5 | 5 | 5 | 5 |
| Results | | spacer spray density (particles/mm²) | 180 | 195 | 175 | 210 | 180 | 200 | 180 | 205 | 195 | 185 | 205 | 190 | 180 |
| | | average number of spacer particles (particles/dot) | 3.0 | 3.1 | 3.0 | 3.4 | 3.0 | 3.4 | 3.0 | 3.3 | 3.1 | 3.1 | 3.3 | 3.1 | 3.0 |
| | | precision of spacer arrangement | O | O | O | O | O | O | O | O | O | O | O | △ | △ |
| | | spacer existence range (μm) | 25 | 21 | 18 | 25 | 22 | 25 | 20 | 20 | 19 | 22 | 22 | 32 | 33 |
| | | display image quality | O | O | O | O | O | O | O | O | O | O | O | △ | △ |

As shown in Table 3, in Examples 14 to 24, almost all of the spacer particles were arranged highly precisely in non-display regions and the display quality was excellent. Especially in the case the liquid amount of the charged inks was controlled to be 10 pL or less and in the case the electric charge of the charged inks and the electric charge of the spacer particles which were subjected to electrostatic treatment were opposite, the arrangement precision was high. In Examples 25 and 26, although the arrangement precision was inferior to that of Examples 14 to 24, the display quality was excellent.

(Examples 27 to 46 and Comparative Examples 1 to 4)

(Production of spacer seed particles)

Divinylbenzene 15 part by weight, isooctyl acrylate 5 part by weight, and benzoyl peroxide as a polymerization initiator 1.3 part by weight were evenly mixed in a separable flask.

Next, an aqueous solution of 3% by weight of polyvinyl alcohol (GL-03, manufactured by Kuraray Co., Ltd.) 20 part by weight and sodium dodecylsulfate 0.5 part by weight were added and stirred well and further ion-exchanged water 140 part by weight was added.

Successively, the obtained solution was subjected to reaction at 80°C in nitrogen gas current for 15 hours while being stirred to obtain fine particles. After being washed with hot water and acetone, the obtained particles were classified and the acetone was evaporated to obtain spacer seed particles ($\alpha$) having an average particle diameter 4.0 $\mu$m and a CV value of 3.0%. In the same manner, spacer seed particles ($\beta$) having an average particle diameter 3.0 $\mu$m and a CV value of 3.0% and spacer seed particles ($\gamma$) having an average particle diameter 5.0 $\mu$m and a CV value of 3.0% were produced.

(Production of spacer particles)

Using each of the obtained three kinds of spacer seed particles 5 part by weight were added to dimethyl sulfoxide (DMSO) 20 part by weight, hydroxymethyl methacrylate 2 part by weight, and N-acrylamide 18 part by weight and evenly stirred and dispersed by a sonicater.

Next, nitrogen gas was introduced into the reaction system and the atmosphere was replaced by the nitrogen gas, and the reaction system was continuously stirred at 30°C for 2 hours.

Successively, a 0.1 mol/L ceric ammonium nitrate solution 10 part by weight adjusted with an aqueous 1N nitric acid solution was added and the polymerization reaction was continued for 5 hours. On completion of the reaction, the obtained particles and the reaction solution were separated by filtration with a 3 $\mu$m membrane filter.

The particles were sufficiently washed with ethanol and acetone and vacuum-dried by a vacuum drying apparatus to obtain spacer particles SA ($\alpha$), and also spacer particles SA ($\beta$), and spacer particles SA ($\gamma$) were obtained.

On the other hand, the spacer seed particles ($\alpha$) were added to DMSO 20 part by weight, hydroxymethyl methacrylate 2 part by weight, methacrylic acid 16 part by weight, and lauryl acrylate 2 part by weight and spacer particles SB ($\alpha$) were obtained in the same manner.

(Preparation of spacer particle dispersion)

The obtained 4 types of the spacer particles and 8 types of media shown in Table 4 as media for dispersion media were used to produce the mixtures of the compositions shown in Table 5 and the mixtures were sufficiently stirred and mixed by a sonicater to disperse them in the media and then filtered with a stainless mesh with mesh size of 10 $\mu$m to remove agglomerates and obtain 12 kinds of spacer dispersions A to L.

[Table 4]

| Type of medium | Boiling point (°C) | Viscosity (mPa·s) | Surface tension (mN/m) | Initial contact angle (θ: degree) | | | Rreducing contact angle (θr: degree) | | |
|---|---|---|---|---|---|---|---|---|---|
| | | | | PI1 | PI2 | PI3 | PI1 | PI2 | PI3 |
| IPA (2-propanol) | 82 | 2.4 | 21.7 | 0 | 0 | 0 | 0 | 0 | 0 |
| water | 100 | 1.0 | 72.6 | 57.4 | 76.5 | 89.8 | 14.6 | 30.2 | 57.2 |
| EGME (ethylene glycol monoethyl ether) | 120 | 2.1 | 31.8 | 0 | 0 | 24.5 | 0 | 0 | 0 |
| PG (propylene glycol) | 187 | 56.0 | 38.0 | less than 5 | 31.1 | 42.0 | 0 | less than 5 | 12.5 |
| DEGMM (diethylene glycol monomethyl ether) | 194 | 4.0 | 34.8 | 0 | 5.8 | 33.6 | 0 | 0 | 6.4 |
| EG (ethylene glycol) | 198 | 23.0 | 46.5 | 25.0 | 50.8 | 69.0 | 0 | 15.0 | 51.2 |
| 1,4-BD (1,4-butanediol) | 229 | 88.0 | 45.3 | 20.4 | 41.0 | 50.8 | 0 | 10.7 | 35.4 |
| DEG (diethylene glycol) | 245 | 35.0 | 48.5 | 22.7 | 38.8 | 53.5 | 0 | 13.5 | 32.8 |

remark-1: viscosity: measured at 20°C

remark-2: PI1, PI2, and PI3: oriented film

remark-3: surface energy of the oriented film (mN/m)

| PI1 | PI2 | PI3 |
|---|---|---|
| 46.0 | 39.0 | 26.0 |

[Table 5]

| Spacer particle dispersion | | | A | B | C | D | E | F | G | H | I | J | K | L |
|---|---|---|---|---|---|---|---|---|---|---|---|---|---|---|
| Dispersion medium | IPA | | 15 | 10 | – | 10 | 10 | 10 | 10 | 15 | 15 | 15 | 15 | 10 |
| | water | | 85 | – | – | – | – | – | – | 15 | 15 | 15 | 15 | 40 |
| | EGME | | – | – | – | – | – | – | – | – | – | – | – | – |
| | PG | | – | – | – | 90 | – | – | – | – | – | – | – | – |
| | DEGMM | | – | – | – | – | 90 | – | – | – | – | – | – | – |
| | EG | | – | 90 | 100 | – | – | – | – | 70 | 70 | 70 | 70 | 50 |
| | 1,4-BD | | – | – | – | – | – | 90 | – | – | – | – | – | – |
| | DEG | | – | – | – | – | – | – | 90 | – | – | – | – | – |
| Spacer particle | SA($\alpha$) | | 0.25 | 0.25 | 0.25 | 0.25 | 0.25 | 0.25 | 0.25 | 0.25 | – | – | – | 0.25 |
| | SA($\beta$) | | – | – | – | – | – | – | – | – | – | 0.25 | – | – |
| | SA($\gamma$) | | – | – | – | – | – | – | – | – | – | – | 0.25 | – |
| | SB($\alpha$) | | – | – | – | – | – | – | – | – | 0.25 | – | – | – |
| Average particle diameter ($\mu$m) | | | 4.0 | 4.0 | 4.0 | 4.0 | 4.0 | 4.0 | 4.0 | 4.0 | 4.0 | 3.0 | 5.0 | 4.0 |
| Surface tension (mN/m) | | | 35.0 | 38.8 | 46.5 | 33.5 | 32.5 | 37.8 | 38.9 | 37.5 | 37.5 | 37.5 | 37.5 | 37.2 |

remark–1: mixing unit: g

remark–2: average particle diameter: average particle diameter of the spacer particles

remark–3: surface tension: surface tension of spacer particle dispersion

Each liquid crystal display was produced by the following method using the spacer particle dispersions, substrates to receive the ejection, and counter substrates in combinations as shown in Table 6 (Examples 27 to 46) and in Table 7 (Comparative Examples 1 to 4)

(Preparation of substrate)

As substrates for a liquid crystal test panel were used a color filter substrate and a TFT array model substrate similarly having difference in level existing in a TFT array substrate. The color filter substrate was obtained by forming a black matrix (width: 25 $\mu$m; vertical intervals: 150 $\mu$m; transverse intervals 75 $\mu$m; and thickness 0.2 $\mu$m) of metal chromium on a glass substrate by a conventionally known method and forming color filter pixels of three colors, that is red, green and blue colors (thickness: 1.5 $\mu$m) in the matrix. An overcoat layer and an ITO transparent electrode were formed thereon and further a solution containing polyimide (trade name: Sunever SE150; manufactured by Nissan Chemical Industries, Ltd.) was evenly applied thereto by a spin coating method and dried at 150°C and then fired at 230°C for 1 hour to be cured and to form an oriented film PI2 (surface energy: 39.0 mN/m). Also, another oriented film PI1 (surface energy: 46.0 mN/m) was formed using another solution containing polyimide (trade name: Sunever SE130, manufactured by Nissan Chemical Industries, Ltd.) and also another oriented film PI3 (surface energy: 26.0 mN/m) was formed using another solution containing polyimide (trade name: Sunever SE1211, manufactured by Nissan Chemical Industries, Ltd.). In this connection, the surface energy of the oriented films were calculated by a conventionally known method of measuring the initial contact angle θ of several kinds of organic solvents whose surface tensions were already known to the oriented films and computing the critical surface energies from the correlation between their cosθ values and the surface tensions of the organic solvents.

Further, smooth surface substrates (reference to Fig. 7-15) were produced. Also, the TFT array substrate was produced by forming portions different in level of a copper foil (width: 8 $\mu$m and height difference: 5 mm) were formed in the positions on a glass substrate facing to the black matrix of the color filter. An ITO transparent electrode was further formed thereon and an oriented film (reference to Fig. 7-16) was formed further thereon by the above-mentioned manner. Substrates with the height difference of 200 nm in the portions different in level were also produced.

(Spacer particle arrangement by ink-jet manner)

The above-mentioned TFT array model substrate having difference in level was put on a stage heated at 45°C by an attached heater and by an ink-jet apparatus comprising a piezo type head having a 50 $\mu$m aperture diameter, a spacer dispersion was ejected at 110 $\mu$m intervals on every other vertical line aiming to portions different in level corresponding to the black matrix of the color filter substrate to arrange spacer particles at vertically 110 $\mu$m x transversely 150 $\mu$m pitches and dried. The gap between the nozzle (the head face) and the substrate at the time of ejection was set to be 0.5 mm and a double pulse method was employed.

Next, after it was confirmed that the spacer particle dispersion ejected on the substrate on the stage was completely dried by eye observation, the remaining dispersion medium was further removed and the substrate was shifted to a hot plate at 150°C and heated and left still for 15 minutes to firmly fix the spacer particles in the substrate. For the spacer particle dispersions with high viscosity, the head of the ink-jet apparatus was heated to eject the dispersions.

(Production of Liquid crystal display)

The TFT array model substrate in which the spacer particles were arranged in the above-mentioned manner and a color filter substrate to be a counter substrate were stuck to each other through a sealing agent in the peripheries of the substrates and the sealing agent was heated at 150°C for 1 hour to be cured to form an empty cell having a cell gap equal to the particle diameter of the spacer particles and then a liquid crystal was packed by a vacuum method and an injection inlet was sealed by a end-sealing agent to produce a Liquid crystal display.

(Property evaluation)

The properties of the obtained liquid crystal display (1. spacer particle spray density; 2. average number of spacer particles; 3. precision of spacer particle arrangement; 4. spacer particle existence range; and 5. display image quality) were evaluated and the results are as shown in Table 6 (for Examples) and Table 7 (for Comparative Examples).

1. Spacer particle spray density

The number of spacer particles sprayed per 1 mm$^2$ was measured.

2. Average number of spacer particles

The average value of the number of spacer particles agglomerated per one dot (arrangement point) in 1 mm$^2$ area was measured. In this connection, no spacer particle was agglomerated in the Liquid crystal displays of Comparative Examples 1 to 4 and therefore, the average number of the spacer particles could not measured.

3. Precision of spacer particle arrangement

The arrangement state of spacer particles after the droplets of the spacer particle dispersion ejected on the substrate were observed by an electronic microscope and the arrangement precision of the spacer particles was judged according to the following standard.
[Judging standard]

o: Almost all of the spacer particles were arranged in the light shielding regions.
△: Some of spacer particles were at positions out of the light shielding regions.
x: Many spacer particles were at positions out of the light shielding regions.

4. Spacer particle existence precision

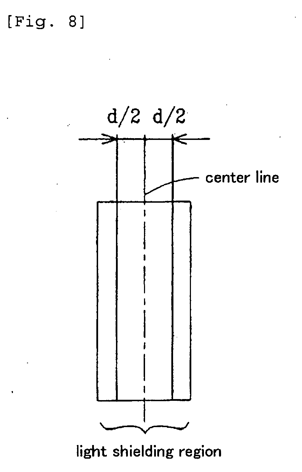

As shown in Fig. 8, two parallel lines at equal intervals in both sides from the center part corresponding to the light shielding regions were drawn and the distance d($\mu$m) of neighboring two parallel lines where 95% in number of spacer particles or more existed was measured within 1 mm$^2$ area.

5. Display image quality

Existence of display failure such as light blank attributed to spacer particles was observed by an electronic microscope by applying prescribed voltage to the liquid-crystal display and the display image quality was evaluated according to the following standard.
[Judging standard]

o: The spacer particles were scarcely observed in the , pixel regions (display regions) and no light blank attributed to the spacer particles was caused and the display quality was excellent.
△: A small number of spacer particles were observed in the pixel regions (display regions) and display failure such as light blank attributed to the spacer particles was slightly caused.
x: Spacer particles were observed in the pixel regions (display regions) and light blank attributed to the spacer particles was considerably observed.

[Table 6]

EP 1 643 299 A1

| | Type of the spacer particle dispersion | Substrate to receive dispersion ejection | | | | | Counter substrate | | Results of property evaluation | | | | |
|---|---|---|---|---|---|---|---|---|---|---|---|---|---|
| | | type | type of oriented films | difference in level (nm) | initial contact angle $\theta$ (degree) | reducing contact angle $\theta r$ (degree) | type | difference in level (nm) | spray density (particles /mm$^2$) | average number of spacer particles (particles /dot) | precision of arrangement | existence range ($\mu$ m) | display image quality |
| Example27 | A | 16 | PI1 | 5 | 32.4 | 10.0 | 15 | 0 | 180 | 3.0 | O | 25 | O |
| Example28 | A | 16 | PI2 | 5 | 47.5 | 25.8 | 15 | 0 | 190 | 3.1 | O | 23 | O |
| Example29 | A | 16 | PI3 | 5 | 54.7 | 42.5 | 15 | 0 | 175 | 3.0 | O | 20 | O |
| Example30 | B | 16 | PI2 | 5 | 26.9 | 14.4 | 15 | 0 | 200 | 3.2 | O | 25 | O |
| Example31 | B | 16 | PI3 | 5 | 35.3 | 33.3 | 15 | 0 | 190 | 3.1 | O | 24 | O |
| Example32 | C | 16 | PI2 | 5 | 50.8 | 15.0 | 15 | 0 | 190 | 3.1 | O | 24 | O |
| Example33 | C | 16 | PI3 | 5 | 69.0 | 51.2 | 15 | 0 | 180 | 3.0 | O | 21 | O |
| Example34 | D | 16 | PI3 | 5 | 18.4 | 9.7 | 15 | 0 | 210 | 3.3 | O | 25 | O |
| Example35 | E | 16 | PI3 | 5 | 18.2 | 5.7 | 15 | 0 | 190 | 3.1 | O | 25 | O |
| Example36 | F | 16 | PI2 | 5 | 21.4 | 10.2 | 15 | 0 | 180 | 3.0 | O | 24 | O |
| Example37 | F | 16 | PI3 | 5 | 25.8 | 18.1 | 15 | 0 | 200 | 3.4 | O | 23 | O |
| Example38 | G | 16 | PI2 | 5 | 22.2 | 9.8 | 15 | 0 | 190 | 3.1 | O | 22 | O |
| Example39 | G | 16 | PI3 | 5 | 24.3 | 20.0 | 15 | 0 | 180 | 3.0 | O | 22 | O |
| Example40 | H | 16 | PI2 | 5 | 34.5 | 18.2 | 15 | 0 | 190 | 3.2 | O | 24 | O |
| Example41 | H | 16 | PI3 | 5 | 47.2 | 42.4 | 15 | 0 | 175 | 3.0 | O | 23 | O |
| Example42 | I | 16 | PI3 | 5 | 47.2 | 42.4 | 15 | 0 | 195 | 3.0 | O | 22 | O |
| Example43 | J | 16 | PI3 | 5 | 47.2 | 42.4 | 15 | 0 | 220 | 3.6 | O | 21 | O |
| Example44 | K | 16 | PI3 | 5 | 47.2 | 42.4 | 15 | 0 | 170 | 2.9 | O | 25 | O |
| Example45 | H | 15 | PI3 | 0 | 47.2 | 42.4 | 16 | 5 | 180 | 3.1 | O | 25 | O |
| Example46 | H | 16 | PI3 | 200 | 47.2 | 42.4 | 15 | 0 | 175 | 3.0 | O | 20 | O |

remark: type of substrate to receive dispersion ejection and type of counter substrate: symbols in Fig. 7

32

As is clear from Table 6, the Liquid crystal displays of Examples 27 to 46 according to the method of producing

[Table 7]

| | Substrate to receive dispersion ejection | | | | | Counter substrate | | | Results of property evaluation | | | |
| Type of the spacer particle dispersion | type | type of oriented films | difference in level (nm) | initial contact angle θ (degree) | reducing contact angle θr (degree) | type | difference in level (nm) | spray density (particles /mm²) | average number of spacer particles (particles /dot) | precision of arrangement | existence range (μm) | display image quality |
|---|---|---|---|---|---|---|---|---|---|---|---|---|
| Comparative Example1 | B | 16 | PI1 | 5 | 17.9 | less than 5 | 15 | 0 | 200 | - | × | 60 | × |
| Comparative Example2 | D | 16 | PI1 | 5 | 24.2 | less than 5 | 15 | 0 | 185 | - | × | 68 | × |
| Comparative Example3 | L | 16 | PI1 | 5 | 33.4 | less than 5 | 15 | 0 | 185 | - | × | 44 | × |
| Comparative Example4 | H | 16 | PI1 | 5 | 28.5 | less than 5 | 15 | 0 | 190 | - | × | 48 | × |

remark: type of substrate to receive dispersion ejection and type of counter substrate: symbols in Fig. 7

the invention were all found excellent in all properties of spacer particle spray density, average number of spacer particles, precision of spacer particle arrangement, spacer particle existence range, and display image quality.

On the other hand, as is clear from Table 7, the Liquid crystal displays of Comparative Examples 1 to 4 in which the reducing contact angle (θr) of the spacer particle dispersion to the substrate to receive the dispersion ejection was less than 5 degree, the spacer particles were not agglomerated and therefore, the average number of spacer particles could not be calculated and the precision of spacer particle arrangement was inferior and the spacer particle existence range was wide, resulting in inferior display image quality.

(Examples 47 to 58 and Comparative Example 5) (Production of spacer seed particles)

Divinylbenzene 15 part by weight, isooctyl acrylate 5 part by weight, and benzoyl peroxide as a polymerization initiator 1.3 part by weight were put and evenly stirred and mixed in a separable flask.

Next, an aqueous solution of 3% by weight of polyvinyl alcohol (trade name: Kuraray Poval GL-03, manufactured by Kuraray Co., Ltd.) 20 part by weight and sodium dodecylsulfate 0.5 part by weight were added and stirred well and further ion-exchanged water 140 part by weight was added.

Successively, the obtained solution was subjected to polymerization reaction at 80°C in nitrogen gas current for 15 hours while being stirred to obtain fine particles. After being washed with hot water and acetone, the obtained particles were classified and the acetone was evaporated to obtain spacer seed particles (α). The obtained spacer seed particles (α) has an average particle diameter 4.0 μm and a CV value of 3.0%. In the same manner, spacer seed particles (β) having an average particle diameter 3.0 μm and a CV value of 3.0% and spacer seed particles (γ) having an average particle diameter 5.0 μm and a CV value of 3.0% were produced.

(Production of spacer particles)

Each of the obtained three kinds of spacer seed particles 5 part by weight was added to dimethyl sulfoxide (DMSO) 20 part by weight, hydroxymethyl methacrylate 2 part by weight, and N-acrylamide 18 part by weight and evenly stirred and dispersed by a sonicater.

Next, nitrogen gas was introduced into the reaction system and the atmosphere was replaced by the nitrogen gas and the reaction system was continuously stirred at 30°C for 2 hours.

Successively, a 0.1 mol/L ceric ammonium nitrate solution 10 part by weight adjusted with an aqueous 1N nitric acid solution was added and the polymerization reaction was continued for 5 hours. On completion of the reaction, the obtained particles and the reaction solution were separated by filtration with a 3 μm membrane filter.

The particles were sufficiently washed with ethanol and acetone and vacuum-dried by a vacuum drying apparatus to obtain spacer particles SA (α), and also spacer particles SA (β), and spacer particles SA (γ) were obtained.

On the other hand, the spacer seed particles (β) 5 part by weight were added to DMSO 20 part by weight, hydroxymethyl methacrylate 2 part by weight, methacrylic acid 16 part by weight, and lauryl acrylate 2 part by weight and spacer particles SB (β) were obtained in the same manner.

(Preparation of spacer particle dispersion)

The obtained spacer particles SA and SB were used and mixed with the compositions shown in Table 8 and the mixture compositions were sufficiently stirred and mixed by a sonicater to disperse them evenly and then the dispersions were filtered with a stainless mesh with mesh size of 10 μm to remove agglomerates and obtain 7 kinds of spacer dispersions A to G.

[Table 8]

| Spacer particle dispersion | | A | B | C | D | E | F | G |
|---|---|---|---|---|---|---|---|---|
| Spacer particle | SA($\alpha$) | - | 0.50 | 0.50 | 0.50 | - | - | - |
| | SA($\beta$) | 0.15 | - | - | - | - | - | 0.15 |
| | SA($\gamma$) | - | - | - | - | 0.50 | - | - |
| | SB($\beta$) | - | - | - | - | - | 0.15 | - |
| dispersion medium | isopropyl alcohol | 14.5 | 14.5 | 15.0 | 15.0 | 14.5 | 14.5 | 14.8 |
| | ethylene glycol | 0.5 | 0.5 | 40.0 | 85.0 | 0.5 | 0.5 | 0.2 |
| | ion-exchanged water | 85.0 | 85.0 | 45.0 | - | 85.0 | 85.0 | 85.0 |
| Average particle diameter of spacer particles ($\mu$m) | | 3.0 | 4.0 | 4.0 | 4.0 | 5.0 | 3.0 | 3.0 |
| Surface tension of dispersion (mN/m) | | 35.0 | 35.0 | 32.0 | 31.0 | 35.0 | 35.0 | 35.0 |

remark-1: mixing unit: part by weight

remark-2: dispersion: spacer particle dispersion

Each liquid crystal display cell was produced by the following method using the spacer particle dispersions, substrates to receive the dispersion ejection, and counter substrates in combinations as shown in Table 9.

(Production of substrate)

Fig. 7 shows a schematic view showing the substrate used for Examples and Fig. 7(a) shows an overhead view and Fig. 7(b) shows a side view.

As substrates for a liquid crystal display cell were prepared a color filter substrate and a TFT array model substrate similarly having difference in level existing in a TFT array substrate.

The color filter substrate was obtained by forming a black matrix (width: 25 $\mu$m; vertical intervals: 150 $\mu$m; transverse intervals 75 $\mu$m; and thickness 0.2 $\mu$m) of metal chromium on a glass substrate by a conventional method and forming color filter pixels of three colors, that is red, green and blue colors (thickness: 1.5 μm) in the matrix. An overcoat layer and an ITO transparent electrode were formed thereon and further a solution containing polyimide (trade name: Sunever SE7492, manufactured by Nissan Chemical Industries, Ltd.) was evenly applied thereto by a spin coating method and dried at 150°C and then fired at 230°C for 1 hour to be cured and to form an oriented film PI1 (surface energy: 36 mN/m). Also, another oriented film PI2 (surface energy: 26 mN/m) was prepared using another solution containing polyimide (trade name: Sunever SE1211, manufactured by Nissan Chemical Industries, Ltd.) and also another oriented film PI3 (surface energy: 46 mN/m) was prepared using another solution containing polyimide (trade name: Sunever SE130, manufactured by Nissan Chemical Industries, Ltd.). In this connection, the surface energies of the oriented films were calculated by a conventionally known method of measuring the initial contact angle θ of several kinds of organic media whose surface tensions were already known to the oriented films and calculating the critical surface energies from the correlation between their cosθ values and the surface tensions of the organic media.

Further, depending on the difference of the intervals among the respective color pixel color filters, two different types of substrates, smooth surface substrates (reference to Fig. 7-15(I)) and substrates having concave parts as portions different in level (depth 1.3 μm) (reference to Fig. 7-15(II)), were produced. Also, a TFT array substrate was produced by forming portions different in level of copper (width 8 μm and thickness 0.2 μm) at positions on a glass substrate facing to the black matrix of the color filter substrate and an ITO transparent electrode was formed on the copper foil and an oriented film was formed thereon by the above-mentioned method (reference to Fig. 7-16). In this case, substrates with height difference of the portions different in level of 0.005 (μm) and 1.0 (μm) were also produced.

(Spacer particle arrangement by ink-jet apparatus)

The above-mentioned TFT array model substrate having difference in level was put on a stage heated at 45°C by an attached heater and by an ink-jet apparatus comprising a piezo type head having a 50 μm aperture diameter at the head tip end, droplets of a spacer particle dispersion were ejected at 110 μm intervals on every other vertical line aiming to the portions different in level corresponding to the black matrix of the color filter to arrange spacer particles at vertically 110 μm x transversely 150 μm pitches. The gap between the nozzle (the head face) and the substrate at the time of ejection was set to be 0.5 mm and a double pulse method was employed. The spray density of the spacer particles arranged in such a manner was 200 particles/mm$^2$. Next, after it was confirmed that the spacer particle dispersion ejected on the substrate on the stage was completely dried by eye observation, the remaining dispersion medium was further removed and to firmly fix the spacer particles in the substrate, the substrate was shifted to a hot plate at 150°C and heated and left still for 15 minutes.

(Production of liquid crystal display cell)

The TFT array model substrate in which the spacer particles were arranged in the above-mentioned manner and a color filter substrate to be a counter substrate were stuck to each other through a sealing agent in the peripheries of the substrates and the sealing agent was heated at 150°C for 1 hour to be cured and to form an empty cell having a cell gap equal to the particle diameter of the spacer particles and then a liquid crystal was packed by a vacuum method and an injection inlet was sealed by a end-sealing agent to produce a liquid crystal display cell.

(Property evaluation)

The properties of the obtained liquid crystal display (1. precision of spacer particle arrangement; 2. spacer particle existence range; and 3. display image quality) were evaluated and the results are as shown in Table 9.

1. Precision of spacer particle arrangement

The arrangement state of the spacer particles after the droplets of the spacer particle dispersion ejected on the substrate was observed by an electronic microscope and the precision of the spacer particle arrangement was evaluated according to the following judging standard.
[Judging standard]

    o: Almost all of the spacer particles were arranged in the light shielding regions.
    Δ: Some of spacer particles were at positions out of the light shielding regions.
    ×: Many spacer particles were at positions out of the light shielding regions.

2. Spacer particle existence range

Fig. 8 shows a schematic view showing the evaluation method of the existence range of the spacer particles. As shown in Fig. 8, two parallel lines at equal intervals in both sides from the center line of the light shielding regions were drawn and the distance d($\mu$m) of neighboring two parallel lines where 95% in number of spacer particles or more existed was measured within 1 mm$^2$ area.

3. Display image quality

Existence of display failure such as light blank attributed to spacer particles was observed by an electronic microscope by applying prescribed voltage to the liquid-crystal display cell and the display image quality was evaluated according to the following judging standard.
[Judging standard]

○: The spacer particles were scarcely observed in the pixel regions (the display regions) and no display failure such as light blank attributed to the spacer particles was caused and the display quality was excellent.
△: A small number of spacer particles were observed in the pixel regions (the display regions) and display failure such as light blank attributed to the spacer particles was slightly caused.
×: Many spacer particles were observed in the pixel regions (the display regions) and light blank attributed to the spacer particles was considerably observed.

[Table 9]

| | Type of the spacer particle dispersion | Spacer particles | | Substrate to receive dispersion ejection | | | | Counter substrate | | Results of property evaluation | | |
|---|---|---|---|---|---|---|---|---|---|---|---|---|
| | | type | average particle diameter (μm) | type | type of oriented films | SE of oriented film (mN/m) | height difference of difference in level (μm) | type | height difference of difference in level (μm) | (1) precision of arrangement | (2) existence range (μm) | (3) display image quality |
| Example47 | A | SA(β) | 3.0 | 16 | PI1 | 36 | 0.005 | 15(I) | 0 | ○ | 20 | ○ |
| Example48 | B | SA(α) | 4.0 | 16 | PI1 | 36 | 0.005 | 15(I) | 0 | ○ | 21 | ○ |
| Example49 | C | SA(α) | 4.0 | 16 | PI1 | 36 | 0.005 | 15(I) | 0 | ○ | 23 | ○ |
| Example50 | D | SA(α) | 4.0 | 16 | PI1 | 36 | 0.005 | 15(I) | 0 | ○ | 25 | ○ |
| Example51 | E | SA(γ) | 5.0 | 16 | PI1 | 36 | 0.005 | 15(I) | 0 | ○ | 24 | ○ |
| Example52 | A | SA(β) | 3.0 | 16 | PI2 | 26 | 0.005 | 15(I) | 0 | ○ | 20 | ○ |
| Example53 | C | SA(α) | 4.0 | 16 | PI2 | 26 | 0.005 | 15(I) | 0 | ○ | 22 | ○ |
| Example54 | D | SA(α) | 4.0 | 16 | PI2 | 26 | 0.005 | 15(I) | 0 | ○ | 22 | ○ |
| Example55 | A | SA(β) | 3.0 | 16 | PI1 | 36 | 0.2 | 15(I) | 0 | ○ | 17 | ○ |
| Example56 | A | SA(β) | 3.0 | 15(II) | PI1 | 36 | −1.3 | 16 | 0.005 | ○ | 18 | ○ |
| Example57 | F | SB(β) | 3.0 | 16 | PI1 | 36 | 0.005 | 15(I) | 0 | ○ | 21 | ○ |
| Example58 | G | SA(β) | 3.0 | 16 | PI3 | 46 | 0.005 | 15(I) | 0 | △ | 32 | △ |
| Comparative Example5 | D | SA(α) | 4.0 | 16 | PI3 | 46 | 0.005 | 15(I) | 0 | × | 60 | × |

remark−1: type of substrate to receive dispersion ejection and type of counter substrate: symbols in Fig. 7

remark−2: SE of oriented film: surface energy of oriented film

remark−3: (1) precision of arrangement and (2) existence range: (1) precision of spacer particle arrangement and (2) spacer particle existence range

As is clear from Table 9, the liquid crystal display cells of Examples 47 to 58 according to the method of producing the invention were all found excellent in all properties of precision of spacer particle arrangement, existence range of spacer particles, and display image quality.

On the other hand, the liquid crystal display cell of Comparative Example 5 in which the surface energy of the oriented film of the substrate to receive the dispersion ejection exceeded 45 mN/m was found inferior in the precision of spacer particle arrangement, having a wide existence range of spacer particle existence range, and inferior in the display image quality.

(Examples 59 to 69 and Comparative Examples 6 and 7)

(Production of spacer seed particles)

Divinylbenzene 15 part by weight, isooctyl acrylate 5 part by weight, and benzoyl peroxide as a polymerization initiator 1.3 part by weight were put and evenly stirred and mixed in a separable flask.

Next, an aqueous solution of 3% by weight of polyvinyl alcohol (trade name: Kuraray Poval GL-03, manufactured by Kuraray Co., Ltd.) 20 part by weight and sodium dodecylsulfate 0.5 part by weight were added and evenly stirred and mixed well and further ion-exchanged water 140 part by weight was added.

Successively, the obtained solution was subjected to polymerization reaction at 80°C in nitrogen gas current for 15 hours while being stirred to obtain fine particles. After being washed with hot water and acetone, the obtained particles were classified and the acetone was evaporated to obtain spacer seed particles ($\alpha$). The obtained spacer seed particles ($\alpha$) had an average particle diameter 4.0 $\mu$m and a CV value of 3.0%. In the same manner, spacer seed particles ($\beta$) having an average particle diameter 3.0 $\mu$m and a CV value of 3.0% and spacer seed particles (y) having an average particle diameter 5.0 $\mu$m and a CV value of 3.0% were produced.

(Production of spacer particles)

Each of the obtained three kinds of spacer seed particles 5 part by weight was added to dimethyl sulfoxide (DMSO) 20 part by weight, hydroxymethyl methacrylate 2 part by weight, and N-acrylamide 18 part by weight and the mixture was evenly stirred and mixed after it was dispersed by a sonicater.

Next, the reaction system was replaced by nitrogen gas and the reaction system was continuously stirred at 30°C for 2 hours.

Successively, a 0.1 mol/L ceric ammonium nitrate solution 10 part by weight adjusted with an aqueous 1N nitric acid solution was added and the polymerization reaction was continued for 5 hours. On completion of the reaction, the obtained particles and the reaction solution were separated by filtration with a 3 $\mu$m membrane filter.

The obtained particles were sufficiently washed with ethanol and acetone and vacuum-dried by a vacuum drying apparatus to obtain spacer particles SA ($\alpha$), ($\beta$), and ($\gamma$).

On the other hand, the spacer seed particles ($\beta$) were added to DMSO 20 part by weight, hydroxymethyl methacrylate 2 part by weight, methacrylic acid 16 part by weight, and lauryl acrylate 2 part by weight and spacer particles SB ($\beta$) were obtained in the same manner.

(Preparation of spacer particle dispersion)

The obtained spacer particles SA and SB were used and mixed with the compositions shown in Table 10 and the mixture compositions were sufficiently stirred and mixed by a sonicater to disperse them evenly and then the dispersions were filtered with a stainless mesh with mesh size of 10 $\mu$m to remove agglomerates and obtain 6 kinds of spacer dispersions A to F.

[Table 10]

| Spacer particle dispersion | | A | B | C | D | E | F |
|---|---|---|---|---|---|---|---|
| Spacer particle | SA(α) | – | 0.50 | 0.50 | 0.50 | – | – |
| | SA(β) | 0.15 | – | – | – | – | – |
| | SA(γ) | – | – | – | – | 0.50 | – |
| | SB(β) | – | – | – | – | – | 0.15 |
| dispersion medium | isopropyl alcohol | 14.5 | 14.5 | 15.0 | 15.0 | 14.5 | 14.5 |
| | ethylene glycol | 0.5 | 0.5 | 40.0 | 85.0 | 0.5 | 0.5 |
| | ion-exchanged water | 85.0 | 85.0 | 45.0 | – | 85.0 | 85.0 |
| Average particle diameter of spacer particles (μm) | | 3.0 | 4.0 | 4.0 | 4.0 | 5.0 | 3.0 |
| Surface tension of dispersion (mN/m) | | 35.0 | 35.0 | 32.0 | 31.0 | 35.0 | 35.0 |
| Contact angle of dispersion to substrate (degree) | | 47 | 47 | 38 | 35 | 47 | 47 |

remark –1: mixing unit: part by weight
remark–2: dispersion: spacer particle dispersion

Each liquid crystal display cell was produced by the following method employing the spacer particle dispersions, substrates to receive the dispersion ejection, counter substrates, and the ejection intervals (pitches) of the droplets of spacer dispersions in combinations as shown in Table 11.

(Production of substrate)

As substrates for a liquid crystal display cell were prepared a color filter substrate and a TFT array model substrate similarly having difference in level existing in a TFT array substrate.
The color filter substrate was obtained by forming a black matrix (width: 15 μm; vertical intervals: 150 μm; transverse intervals 75 μm; and thickness 0.2 μm) of metal chromium on a glass substrate by a conventionally known method and forming color filter pixels of three colors, that is red, green and blue colors (thickness: 1.5 μm) in the matrix.
An overcoat layer and an ITO transparent electrode were formed thereon and further a solution containing polyimide (trade name: Sunever SE150, manufactured by Nissan Chemical Industries, Ltd.) was evenly applied thereto by a spin coating method and dried at 150°C and then fired at 230°C for 1 hour to be cured and to form an oriented film. Further, depending on the difference of the intervals among the respective color filters, two different types of substrates, smooth surface substrates (reference to Fig. 7-15(I)) and substrates having concave parts as portions different in level (depth: 1.3 μm) (reference to Fig. 7-15(II)), were produced. Also, a TFT array substrate was produced by forming portions different in level of copper (width 4 μm and thickness 0.2 μm) at positions on a glass substrate facing to the black matrix of the color filter substrate and an ITO transparent electrode was formed on the copper foil and an oriented film was formed thereon.

In this case, substrates with height difference of the portions different in level of 0.005 (μm) and 1.0 (μm) were also produced.

(Spacer particle arrangement by ink-jet apparatus)

The above-mentioned TFT array model substrate having difference in level was put on a stage heated at 45°C by an attached heater and by an ink-jet apparatus comprising a piezo type head having a 50 μm aperture diameter at the head tip end, droplets of a spacer particle dispersion were ejected at 110 μm intervals on every other vertical line aiming to the portions different in level corresponding to the black matrix of the color filter substrate to arrange spacer particles at vertically 110 μm × transversely 150 μm pitches. The gap between the nozzle (the head face) and the substrate at the time of ejection was set to be 0.5 mm and a double pulse method was employed. The dispersion density of the spacer particles arranged in such a manner was 200 particles/mm$^2$.

Next, after it was confirmed that the spacer particle dispersion ejected on the substrate on the stage was completely dried by eye observation, the remaining dispersion medium was further removed and to firmly fix the spacer particles in the substrate, the substrate was shifted to a hot plate at 150°C and heated and left still for 15 minutes.

(Production of liquid crystal display cell)

The TFT array model substrate in which the spacer particles were arranged in the above-mentioned manner and a color filter substrate to be a counter substrate were stuck to each other through a sealing agent in the peripheries of the substrates and the sealing agent was heated at 150°C for 1 hour to be cured and to form an empty cell having a cell gap equal to the particle diameter of the spacer particles and then a liquid crystal was packed by a vacuum method and an injection inlet was sealed by a end-sealing agent to produce a liquid crystal display cell.

(Property evaluation)

The properties of the obtained liquid crystal display (1. precision of spacer particle arrangement; 2. spacer particle existence range; 3. display image quality) were evaluated and the results are as shown in Table 11.

1. Precision of spacer particle Arrangement

The arrangement state of the spacer particles after the droplets of the spacer particle dispersion ejected on the substrate was observed by an electronic microscope and the precision of the spacer particle arrangement was evaluated according to the following judging standard.

o: Almost all of the spacer particles were arranged in the light shielding regions.
Δ: Some of spacer particles were at positions out of the light shielding regions.
x: Many spacer particles were at positions out of the light shielding regions.

2. Spacer particle existence range

As shown in Fig. 8, two parallel lines at equal intervals in both sides from the center line of the light shielding regions were drawn and the distance d(μm) of neighboring two parallel lines where 95% in number of spacer particles or more existed was measured within 1 mm$^2$ area.

3. Display image quality

Existence of display failure such as light blank attributed to spacer particles was observed by an electronic microscope by applying prescribed voltage to the liquid-crystal display cell and the display image quality was evaluated according to the following judgment standard.

○: The spacer particles were scarcely observed in the pixel regions (the display regions) and no display failure such as light blank attributed to the spacer particles was caused and the display quality was excellent.

Δ: A small number of spacer particles were observed in the pixel regions (the display regions) and display failure such as light blank attributed to the spacer particles was slightly caused.

x: Many spacer particles were observed in the pixel regions (the display regions) and light blank attributed to the spacer particles was considerably observed.

[Table 11]

| | Type of the spacer particle dispersion | Spacer particles | | Substrate to receive dispersion ejection | | Counter substrate | | Ejection intervals of droplets | | Results of property evaluation | | |
|---|---|---|---|---|---|---|---|---|---|---|---|---|
| | | type | average particle diameter (μm) | type | height difference of difference in level (μm) | type | height difference of difference in level (μm) | vertical (μm) | transverse (μm) | (1) precision of arrangement | (2) existence range (μm) | (3) display image quality |
| Example59 | A | SA(β) | 3.0 | 16 | 0.2 | 15(I) | 0 | 110 | 150 | O | 13 | O |
| Example60 | B | SA(α) | 4.0 | 16 | 0.2 | 15(I) | 0 | 110 | 150 | O | 14 | O |
| Example61 | C | SA(α) | 4.0 | 16 | 0.2 | 15(I) | 0 | 110 | 150 | O | 15 | O |
| Example62 | D | SA(α) | 4.0 | 16 | 0.2 | 15(I) | 0 | 110 | 150 | O | 14 | O |
| Example63 | E | SA(γ) | 5.0 | 16 | 0.2 | 15(I) | 0 | 110 | 150 | O | 15 | O |
| Example64 | A | SA(β) | 3.0 | 16 | 1.0 | 15(I) | 0 | 110 | 150 | O | 14 | O |
| Example65 | A | SA(β) | 3.0 | 15(II) | -1.3 | 16 | 0.005 | 110 | 150 | O | 15 | O |
| Example66 | A | SA(β) | 3.0 | 16 | 0.2 | 15(II) | -1.3 | 110 | 150 | O | 14 | O |
| Example67 | A | SA(β) | 3.0 | 16 | 0.2 | 15(I) | 0 | 150 | 150 | O | 13 | O |
| Example68 | A | SA(β) | 3.0 | 16 | 0.2 | 15(I) | 0 | 150 | 110 | O | 14 | O |
| Example69 | F | SB(β) | 3.0 | 16 | 0.2 | 15(I) | 0 | 110 | 150 | O | 14 | O |
| Comparative Example6 | A | SA(β) | 3.0 | 15(I) | 0 | 16 | 0.2 | 110 | 150 | × | 19 | △ |
| Comparative Example7 | A | SA(β) | 3.0 | 16 | 0.005 | 15(I) | 0 | 110 | 150 | × | 23 | × |

remark-1: type of substrate to receive dispersion ejection and type of counter substrate: symbols in Fig. 7

remark-2: (1) precision of arrangement and (2) existence range: (1) precision of spacer particle arrangement and (2) spacer particle existence range

As is clear from Table 11, the liquid crystal display cells of Examples 59 to 69 according to the method of producing the invention were all found excellent in all properties of precision of spacer particle arrangement, existence range of spacer particles, and display image quality.

On the other hand, the liquid crystal display cell of Comparative Example 6 in which no portion different in level existed in the substrate to receive the dispersion ejection was found inferior in the precision of spacer particle arrangement, having a wide existence range of spacer particle existence range, and inferior in the display image quality. The liquid crystal display cell of Comparative Example 7 in which the height difference |B| in the portions different in level of the substrate to receive the dispersion ejection was less than 0.01 $\mu$m and no portion different in level existed in the counter substrate was found inferior in the precision of spacer particle arrangement, having an extremely wide existence range of spacer particle existence range, and inferior in the display image quality.

INDUSTRIAL APPLICABILITY OF THE INVENTION

In accordance with the invention, it is possible to provide a method of producing a liquid crystal display by which spacer particles can be arranged efficiently, highly precisely and selectively in light shielded regions (non-display parts) or the regions corresponding to the light shielded regions of a substrate for a liquid crystal display by using an ink-jet apparatus and by which a liquid crystal display capable of displaying images with excellent display quality without occurrence of depolarizing attributed to the spacer particles or deterioration of contrasts and color tone owing to light blank.

BRIEF DESCRIPTION OF THE DRAWINGS

[Fig. 1] A cross-sectional view showing one example of a liquid crystal display.
[Fig. 2] A schematic vies showing the ejection state of droplets from a nozzle of an ink-jet apparatus: Fig 2(a) shows a case that the meniscus is not axially symmetric and
Fig. 2(b) shows a case that the meniscus is axially symmetric.
[Fig. 3] A cross-sectional view showing portions different in level.
[Fig. 4] A schematic view showing the side view state of the drying step and Fig. 4(a) shows the case there is no portion different in level and Fig. 4(b) shows the case there are portions different in level.
[Fig. 5] A schematic view showing the overhead view state of the drying step and Fig. 5(a) shows the case there is no portion different in level and Fig. 5(b) shows the case there are portions different in level.
[Fig. 6] A schematic view showing the state that spacer particles are left in the portions different in level and Fig. 6(a) shows the case the spacer particles are left in the convex parts and Fig. 6(b) shows the case the spacer particles are left in the concave parts.
[Fig. 7] A schematic view showing the substrate used in Examples and Fig. 7(a) shows an overhead view and Fig. 7(b) shows a side view.
[Fig. 8] A schematic view showing the evaluation method of the existence range of the spacer particles

DESCRIPTION OF THE NUMERALS

| | |
|---|---|
| 1 | transparent (glass) substrate |
| 2 | polarization plate |
| 3 | transparent electrode |
| 4 | color filter |
| 5 | black matrix |
| 6 | overcoat |
| 7 | liquid crystal |
| 8 | spacer particles |
| 9 | oriented film |
| 10 | sealing agent |
| 11 | meniscus |
| 12 | spacer particle dispersion |
| 13 | deposited droplets of the spacer particle dispersion |
| 14 | portions where the spacer particles gather together owing to the electrostatic interaction |
| 15, 15(I), and 15(II) | color filter substrates |
| 16, 16(I) | TFT array model substrates |
| B | height of the portions different in level |

d               distance between parallel lines where 95% in number of spacer particles or more exist

**Claims**

1. A method of producing a liquid crystal display,
which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the spacer particle in the spacer particle dispersion being subjected to electrostatic charge treatment and the light shielding region or the region corresponding to the light shielding region of the substrate being entirely or partially electrostatically charged with electric charge relatively opposite to that of the spacer particle.

2. The method of producing a liquid crystal display according to claim 1,
wherein a wiring material made of a material capable of being electrostatically charged exists in the light shielding region or the region corresponding to the light shielding region of the substrate.

3. The method of producing a liquid crystal display according to the claim 2,
wherein the wiring material capable of being electrostatically charged is electrostatically charged with electric charge opposite to that of the spacer particle subjected to electrostatic charge treatment.

4. The method of producing a liquid crystal display according to claim 1,
which comprises ejecting a charged ink obtainable by dissolving a charged substance or dispersing a charged substance with a particle diameter 1 $\mu$m or less to the light shielding region or the region corresponding to the light shielding region by an ink-jet manner and drying the charged ink, and then the spacer particle dispersion obtainable by dispersing the spacer particle subjected to electrostatic charge treatment being deposited to a portion including the position of the ejected and dried charged ink.

5. The method of producing a liquid crystal display according to claim 4,
wherein the liquid amount of the charged ink ejected by one ejection is controlled to be 10 pL or less at the time of ejecting the charged ink by an ink-jet manner.

6. The method of producing a liquid crystal display according to claim 4 or 5,
wherein the electric charge of the charged ink and the electric charge of the spacer particle subjected to electrostatic treatment are opposite to each other.

7. A method of producing a liquid crystal display,
which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, the reducing contact angle ($\theta$r) of the spacer particle dispersion to the substrate, the spacer particle dispersion being ejected to, being 5° or more.

8. The method of producing a liquid crystal display according to claim 7,
wherein the spacer particle dispersion contains at least one kind of organic solvents, and the reducing contact angle ($\theta$r) of the spacer particle dispersion of the organic solvent with the highest boiling point among the organic solvents to the substrate, the spacer particle dispersion being ejected to, is 5° or more.

9. The method of producing a liquid crystal display according to claim 7 or 8,
wherein a portion having a low energy surface is formed in the light shielding region or the region corresponding to the light shielding region of at least one substrate.

**10.** A method of producing a liquid crystal display,
which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited in a portion having a low energy surface formed in the light shielding region or the region corresponding to the light shielding region of at least one substrate, the droplet of the spacer particle dispersion being dried to keep the spacer particle in the light shielding region or the region corresponding to the light shielding region.

**11.** The method of producing a liquid crystal display according to claim 10,
wherein a surface energy of the portion having the low energy surface is 45 mN/m or less.

**12.** The method of producing a liquid crystal display according to claim 10 or 11,
wherein the portion having the low energy surface is formed by an oriented film.

**13.** A method of producing a liquid crystal display,
which comprises ejecting spacer particle dispersion obtainable by dispersing a spacer particle by an ink-jet apparatus, and setting a substrate having a spacer particle arranged in the light shielding region of a substrate with a pixel formed or in the region corresponding to the light shielding region of another substrate with no pixel formed and the other substrate having no spacer particle arranged on the opposite sides via a spacer particle arranged in the light shielding region or the region corresponding to the light shielding region in a liquid crystal display comprising a pixel region arranged in a prescribed pattern and a light shielding region defining the pixel region, a droplet of the spacer particle dispersion being deposited to include a portion different in level formed in the region corresponding to the light shielding region of at least one substrate, and being dried to keep the spacer particle in the region corresponding to the light shielding region.

**14.** The method of producing a liquid crystal display according to claim 13,
wherein the height difference of the portion different in level, the spacer particle dispersion being deposited to, is within $0.01 < |B| < 0.95D$, in the case D ($\mu$m) represents a particle diameter of the spacer particle and B ($\mu$m) represents the height difference of the portion different in level.

[Fig. 1]

[Fig. 2]

(a)

(b)

[Fig. 3]

(a)

B

(b)

B

(c)

B

(d)

B

(e)

B

(f)

B

(g)

B

(h)

B

[Fig. 4]

(a)

(1)

S1          S2

(2)

(3)

(4)

L1          L2

(b)

(1)

S1          S2

(2)

(3)

(4)

L1          L2

[Fig. 5]

(a)                                                    (b)

[Fig. 6]

(a)

(b)

[Fig. 7]

(a)

150μm

15

75μm    width

4

5

16

width

(b)

9
3
6
5

15(I)

9
3
14
16(I)

6
9
3

5
4

15(II)

EP 1 643 299 A1

[Fig. 8]

light shielding region

**INTERNATIONAL SEARCH REPORT**

| International application No. |
|---|
| PCT/JP2004/008325 |

A.  CLASSIFICATION OF SUBJECT MATTER
    Int.Cl$^7$  G02F1/1339

According to International Patent Classification (IPC) or to both national classification and IPC

B.  FIELDS SEARCHED

Minimum documentation searched (classification system followed by classification symbols)
    Int.Cl$^7$  G02F1/1339

Documentation searched other than minimum documentation to the extent that such documents are included in the fields searched
    Jitsuyo Shinan Koho        1922–1996    Toroku Jitsuyo Shinan Koho    1994–2004
    Kokai Jitsuyo Shinan Koho   1971–2004    Jitsuyo Shinan Toroku Koho    1996–2004

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 11-24083 A  (Asahi Glass Co., Ltd.),<br>29 January, 1999 (29.01.99),<br>Full text; all drawings<br>(Family: none) | 1-6 |
| A | JP 9-105946 A  (Toshiba Corp.),<br>22 April, 1997 (22.04.97),<br>Full text; all drawings<br>(Family: none) | 1-6 |
| A | JP 11-7028 A  (Asahi Glass Co., Ltd.),<br>22 January, 1999 (22.01.99),<br>Full text; all drawings<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 November, 2004 (08.11.04) | Date of mailing of the international search report<br>22 November, 2004 (22.11.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/008325 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-235188 A (Hitachi, Ltd.), 29 August, 2000 (29.08.00), Full text; all drawings (Family: none) | 1-6 |
| A | JP 2001-188235 A (Seiko Epson Corp.), 10 July, 2001 (10.07.01), Full text; all drawings (Family: none) | 1-6 |

Form PCT/ISA/210 (continuation of second sheet) (January 2004)

**INTERNATIONAL SEARCH REPORT**

| International application No. |
| --- |
| PCT/JP2004/008325 |

---

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**     **Observations where unity of invention is lacking (Continuation of item 3 of first sheet)**

This International Searching Authority found multiple inventions in this international application, as follows:

    The technical feature of claim 1 (and claims dependent on claim 1) relates to a matter that "the spacer particles in the spacer particles-dispersed liquid have been subjected charging processing and the black matrix of the substrate or the area equivalent to the black matrix is entirely or partially charged to an opposite charge relatively to the spacer particles."
    Moreover, the technical feature of claim 7 (and claims dependent on claim 7) relates to a matter that "the sweepback contact angle of the spacer particles-dispersed liquid with respect to the substrate to which the spacer particles-dispersed liquid is discharged is not smaller than 5 degrees."
    (Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-6

**Remark on Protest**     ☐   The additional search fees were accompanied by the applicant's protest.

                        ☐   No protest accompanied the payment of additional search fees.

---

Form PCT/ISA/210 (continuation of first sheet (2)) (January 2004)

**INTERNATIONAL SEARCH REPORT**

International application No.

PCT/JP2004/008325

Continuation of Box No.III of continuation of first sheet(2)

Moreover, the technical feature of claim 10 (and claims dependent on claim 10) relates to a matter that "drops of the spacer particles-dispersed liquid are made to arrive at the portion having a low-energy surface formed in the black matrix or an area equivalent to the black matrix of at least one substrate and the drops of the spacer particles-dispersed liquid are dried so as to remain in the black matrix or the area equivalent to the black matrix."

Moreover, the technical feature of claim 13 (and claims dependent on claim 13) relates to a matter that "drops of the spacer particles-dispersed liquid are made to arrive at the portion including a stepped portion formed in an area equivalent to the black matrix of at least one substrate and dried so as to remain in the area equivalent to the black matrix."

As has been described above, the inventions of claim 1 (and claims dependent on claim 1), claim 7 (and claims dependent on claim 7), claim 10 (and claims referring to claim 10), and claim 13 (and claims dependent on claim 13) have different technical features.

That is, claims 1-14 are divided into four groups of inventions having different technical features and there exists no technical feature common to all of claims 1-14.

Consequently, claims 1-14 do not satisfy the requirement of unity of invention.

Form PCT/ISA/210 (extra sheet) (January 2004)